(19) Europäisches Patentamt
European Patent Office
Office européen des brevets

(11) **EP 4 340 493 A1**

(12) **EUROPEAN PATENT APPLICATION**
published in accordance with Art. 153(4) EPC

(43) Date of publication:
**20.03.2024 Bulletin 2024/12**

(21) Application number: **21942017.1**

(22) Date of filing: **16.12.2021**

(51) International Patent Classification (IPC):
**H04W 72/04** (2023.01)    **H04W 72/12** (2023.01)
**H04W 28/06** (2009.01)

(52) Cooperative Patent Classification (CPC):
**H04W 28/06; H04W 72/04; H04W 72/12**

(86) International application number:
**PCT/JP2021/046609**

(87) International publication number:
**WO 2022/239289 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.05.2021 JP 2021079832**

(71) Applicant: **Panasonic Intellectual Property
Corporation
of America
Torrance, CA 90504 (US)**

(72) Inventors:
• **YAMAMOTO, Tetsuya
  Kadoma-shi, Osaka 571-0057 (JP)**
• **SUZUKI, Hidetoshi
  Kadoma-shi, Osaka 571-0057 (JP)**
• **TRAN, Xuan Tuong
  Singapore 469332 (SG)**

(74) Representative: **Grünecker Patent- und
Rechtsanwälte
PartG mbB
Leopoldstraße 4
80802 München (DE)**

(54) **COMMUNICATION DEVICE AND COMMUNICATION METHOD**

(57)    This communication device is equipped with: a control circuit which makes the signal transmission settings different between cases in which the plurality of periods among the time domain resources allocated to signal transmission include a second period, which has fewer usable resources than does a first period, and cases in which said plurality of periods do not include the second period; and a transmission circuit for transmitting the signal on the basis of the settings.

200

FIG. 7

**EP 4 340 493 A1**

**Description**

Technical Field

The present disclosure relates to a communication apparatus and a communication method.

Background Art

In recent years, a dramatic growth of Internet of Things (IoT) has been expected with the expansion and diversification of radio services as a background. The usage of mobile communication is extending to all fields such as automobiles, houses, home electric appliances, or industrial equipment in addition to information terminals such as smart phones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features of enhanced mobile broadband (eMBB), massive machine type communication (mMTC), and ultra reliable and low latency communication (URLLC), and can flexibly provide radio communication in response to a wide variety of needs, by using these features.

The 3rd Generation Partnership Project (3GPP) as an international standardizing body has been specifying New Radio (NR) as one of 5G radio interfaces.

Citation List

Non-Patent Literature

NPL 1
3GPP TS38.104 V15.13.0, "NR; Base Station (BS) radio transmission and reception (Release 15)," March 2021.
NPL 2
3GPP TSG RAN Meeting #90e, RP-202928, "New WID on NR coverage enhancements," China Telecom, December 2020.
NPL 3
3GPP TS38.211 V16.5.0, "NR; Physical channels and modulation (Release 16)," March 2021.
NPL 4
3GPP TS38.212 V16.5.0, "NR; Multiplexing and channel coding (Release 16),"March 2021.
NPL 5
3GPP TS38.213 V16.5.0, "NR; Physical layer procedures for control (Release 16)," March 2021.
NPL 6
3GPP TS38.214 V16.5.0, "NR; Physical layer procedures for data (Release 16)," March 2021.
NPL 7
3GPP TSG RAN WG1 #104-bis-e, R1-2104102, "Final FL summary of TB processing over multi-slot PUSCH (AI 8.8.1.2)," Moderator (Nokia, Nokia Shanghai Bell), April 2021.
NPL 8
3GPP TSG RAN WG1 #104-bis-e, R1-2103208, "Discussion on TB processing over multi-slot PUSCH," Panasonic, April 2021.
NPL 9
3GPP TS38.331 V16.4.1, "NR; Radio Resource Control (RRC) protocol specification (Release 16)," March 2021.

Summary of Invention

Technical Problem

However, there is scope for further study on a method of improving the resource utilization efficiency in uplink.

One non-limiting and exemplary embodiment of the present disclosure facilitates providing a communication apparatus and a communication method each capable of improving the resource utilization efficiency in uplink.

A communication apparatus according to an exemplary embodiment of the present disclosure includes: control circuitry, which, in operation, varies a configuration for transmission of a signal between a case in which a plurality of sections in a time-domain resource allocated for the transmission of the signal includes a second section and a case in which the plurality of sections does not include the second section, the second section having a less available resource amount than a first section; and transmission circuitry, which, in operation, performs the transmission of the signal based on the configuration.

It should be noted that general or specific embodiments may be implemented as a system, a method, an integrated circuit, a computer program, a storage medium, or any selective combination thereof.

According to an exemplary embodiment of the present disclosure, it is possible to improve the resource utilization efficiency in uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary operation of uplink signal repetition;
FIG. 2 illustrates an exemplary operation of a Transport Block processing over Multi-Slot Physical Uplink Shared Channel (TBoMS) transmission;
FIG. 3 illustrates exemplary Redundancy Versions (RVs) applied to TBoMS;
FIG. 4 is a block diagram illustrating an exemplary configuration of part of a base station;
FIG. 5 is a block diagram illustrating an exemplary configuration of part of a terminal;
FIG. 6 is a block diagram illustrating an exemplary configuration of the base station;
FIG. 7 is a block diagram illustrating an exemplary configuration of the terminal;
FIG. 8 is a flowchart describing an exemplary transmission operation in the terminal;
FIG. 9 illustrates an example of configuring RVs according to Embodiment 1;
FIG. 10 illustrates another example of configuring RVs according to Embodiment 1;
FIG. 11 illustrates an exemplary operation of TBoMS according to Embodiment 1;
FIG. 12 illustrates yet another example of configuring RVs according to Embodiment 1;
FIG. 13 illustrates an example of configuring RVs according to Variation 1;
FIG. 14 illustrates an example of configuring RVs according to Embodiment 2;
FIG. 15 illustrates an exemplary operation of TBoMS according to Embodiment 2;
FIG. 16 illustrates an exemplary operation of TBoMS according to Embodiment 3;
FIG. 17 illustrates an exemplary operation of TBoMS according to Variation 3;
FIG. 18 illustrates an exemplary architecture of a 3GPP NR system;
FIG. 19 schematically illustrates a functional split between Next Generation-Radio Access Network (NG-RAN) and 5th Generation Core (5GC);
FIG. 20 is a sequence diagram of a Radio Resource Control (RRC) connection setup/reconfiguration procedure;
FIG. 21 schematically illustrates usage scenarios of enhanced Mobile BroadBand (eMBB), massive Machine Type Communications (mMTC), and Ultra Reliable and Low Latency Communications (URLLC); and
FIG. 22 is a block diagram illustrating an exemplary 5G system architecture for a non-roaming scenario.

Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (e.g., may be referred to as Frequency Range 1 (FR1)), which is used for cellular communication, a millimeter-wave band such as 28 GHz or 39 GHz band capable of ensuring a wide band (e.g., may be referred to as FR2) can be utilized (e.g., see Non-Patent Literature (hereinafter referred to as "NPL") 1). Further, for example, in FR1, a high frequency band is possibly used compared with the frequency band used in Long Term Evolution (LTE) or 3rd Generation mobile communication systems (3G) such as 3.5 GHz band. The higher the frequency band is, the greater a radio wave propagation loss is likely to be, and thus, the received quality of radio waves is susceptible to deterioration. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in Release 17 (e.g., referred to as "Rel. 17"), a method of improving the coverage in NR has been studied (e.g., see NPL 2).

In NR, for example, a terminal (also referred to as, e.g., User Equipment (UE)) transmits and receives data in accordance with resource allocation indicated by at least one of a layer-1 control signal (e.g., Downlink Control Information (DCI)) on a downlink control channel (e.g., Physical Downlink Control Channel (PDCCH)) from a base station (also referred to as, e.g., gNB) and Radio Resource Control (RRC) corresponding to layer 3 (e.g., see NPLs 3 to 6).

In uplink, for example, the terminal transmits an uplink data channel (e.g., Physical Uplink Shared Channel (PUSCH)) in accordance with the resource allocation (e.g., Grant or UL grant) from the base station. Information on the resource allocation included in at least one of the DCI and RRC may include, for example, information on a time-domain resource with which PUSCH is transmitted. For example, the information on the time-domain resource may include information (e.g., K2) on the timing (e.g., slot offset) from the slot in which the terminal has received PDCCH to the slot in which the terminal transmits PUSCH, information on a PUSCH start-symbol position in a slot or the number of symbols for transmitting PUSCH.

In an uplink transmission in NR, for example, the terminal can transmit PUSCH by using a plurality of slots (this transmission is also referred to as, e.g., Repetition). In a slot-by-slot Repetition specified in NR Release 15 or Release 16 (e.g., referred to as "NR Rel. 15/16"), the same time resource allocation is applied over multiple slots, for example.

In a case where the Repetition is applied, the information on the time-domain resource may include information on the number of slots for repetition (hereinafter may also be referred to as repetition slots), in addition to the information (e.g., K2) on the timing from the slot in which the terminal has received PDCCH to the slot in which the terminal transmits PUSCH, the information on the PUSCH start-symbol position in a slot or the number of symbols for transmitting PUSCH. Herein, the number of repetition slots may be a value counted based on consecutive slots, for example.

In a PUSCH Repetition, since the number of repetition slots to be indicated from the base station to the terminal is a value counted based on the consecutive slots, the number of slots to be used for an actual PUSCH transmission may be less than the number of repetition slots to be indicated, for example. By way of example, in Time Division Duplex (TDD), when at least one of consecutive slots to which PUSCH is assigned includes a downlink slot, PUSCH is not transmitted in the downlink slot (i.e., PUSCH transmission is dropped). Therefore, coverage performance of PUSCH may deteriorate in the PUSCH Repetition.

As a functional extension of the PUSCH repetition, NR Rel. 17 includes a method of counting the number of repetition slots based on an uplink slot that can be used (available) for the PUSCH transmission, for example (e.g., see NPL 2).

Besides, in NR Rel. 15/16, for example, regardless of the presence or absence of Repetition, a data size or a transport block size (TBS) is determined based on a resource amount in units of slots (hereinafter may also be referred to as "a slot unit") or based on a resource amount allocated for an initial PUSCH transmission in Repetition (e.g., resource amount allocated for PUSCH transmission in start slot (first slot) in Repetition) (e.g., see NPL 6). Incidentally, the resource amount may be expressed by, for example, the number of symbols or the number of resource elements. Further, the TBS may be described as a TB size.

Meanwhile, in NR Rel. 17, when PUSCH is transmitted using multiple slots, the following methods have been studied: a method of determining a TBS based on a resource amount of the number of slots (a plurality of slots) to be used for the PUSCH transmission; and a method of determining a TBS by multiplying a TBS calculated from a resource amount in units of slots or a resource amount allocated for an initial PUSCH transmission in Repetition by a scaling coefficient that is greater than one (e.g., see NPL 7). The method of calculating a TBS from a resource amount in units of slots or a resource amount allocated for an initial PUSCH transmission in Repetition may be, for example, the method defined in NR Rel. 15/16 as mentioned above.

The PUSCH transmission for transmitting, over multiple slots, the TB of the TBS calculated by the above-described TBS determination methods is also referred to as "TB processing over multi-slot PUSCH (TBoMS)" or a "TBoMS transmission."

In NR, for example, a Circular Buffer is used in retransmission control, for example. The Circular Buffer is a memory that stores therein encoder outputs (e.g., encoded data or encoded bits including systematic bits and parity bits) and reads the encoder output of the number of bits corresponding to an allocated resource amount from a specified reading starting position (Redundancy Version (RV)) in the Circular Buffer.

In TBoMS, as a method for mapping an encoded bit for the TB determined by the above-described methods to a plurality of slots (e.g., Rate matching method), the following two methods are exemplified.

The first method is, for example, a method of reading, from a specified RV position, an encoder output of the number of bits corresponding to a resource amount of the number of slots (e.g., a plurality of slots) to be used for the PUSCH transmission and mapping the encoded bit to a PUSCH resource over multiple slots.

The second method is, for example, a method of reading, from a specified RV position, an encoder output in number of bits corresponding to a resource amount to be allocated for the PUSCH transmission in each slot and mapping the encoded bit in each slot. In this method, an RV may be varied between the slots.

In TBoMS, for example, a method is exemplified of combining the method in which a TBS is determined by multiplying a TBS calculated from a resource amount in units of slots or a resource amount allocated for an initial PUSCH transmission in Repetition by a scaling coefficient that is greater than one and the method of reading, from a specified RV position, an encoder output in number of bits corresponding to a resource amount to be allocated for the PUSCH transmission in each slot and mapping the encoded bit in each slot, as a TBS determination method and Rate matching (mapping method of encoded bit), respectively (e.g., see NPL 8).

Achievement of TBoMS by this combination of the TBS determination method and the Rate matching method is useful in terms of, for example, making it easier to support non-consecutive slots in the TDD or handle a collision with another channel. By way of example, in the TDD, when TBoMS is applied to non-consecutive multiple slots, the above-described combination of the TBS determination method and the Rate matching method allows slot-by-slot processing (or processing with slot as basic unit) because a TBS and the number of encoded bits to be mapped need not be determined based on a resource amount of the non-consecutive multiple slots.

By contrast, for example, the method of determing a TBS based on a resource amount of the number of slots (e.g., a plurality of slots) to be used for the PUSCH transmission and the method of reading, from a specified RV position, the number of bits corresponding to a resource amount of the number of slots (e.g., a plurality of slots) to be used for the PUSCH transmission and mapping the encoded bit to a PUSCH resource over multiple slots are likely to cause an increase in processing latency as compared with the above-described processing with a slot as a basic unit because the processing of the TBS determination and Rate matching is performed taking into account non-consecutive multiple slots.

Besides, a case may occur where a resource for PUSCH and a resource for another channel overlap (collide) in time with each other, for example. For example, a transmission resource for TBoMS and a transmission resource for an uplink control channel (e.g., Physical Uplink Control Channel (PUCCH)) that transmits uplink control information (e.g., Uplink Control Information (UCI)) possibly overlap in time with each other. In this case, the terminal may, for example, transmit UCI by multiplexing on TBoMS. At this time, in the above-described combination of the TBS determination method and the Rate matching method allows the processing with a slot as a basic unit, and thus, the Rate matching can be applied taking into account a slot in which the transmission resource for TBoMS and the transmission resource for PUCCH transmitting UCI overlap in time with each other. In other words, in the slot where the transmission resource for TBoMS and the transmission resource for PUCCH that transmits UCI overlap in time with each other, it is unnecessary to take into account a slot different from this slot in regard to the TBS determination and the Rate matching.

In TBoMS, as with Repetition, for example, the same time resource may be allocated over a plurality of slots consecutive in units of slots. Here, for example, in the method in which the same time resource is allocated over multiple slots consecutive in units of slots, the number of slots actually used for the PUSCH transmission may be less than the number of slots indicated to the terminal. In one example, when at least one symbol that is unavailable for the PUSCH transmission is included in a PUSCH resource (e.g., symbols) in a slot assigned to TBoMS, the slot is configured to a slot unavailable for the PUSCH transmission, and thus, no PUSCH is transmitted in the slot (i.e., PUSCH transmission is dropped).

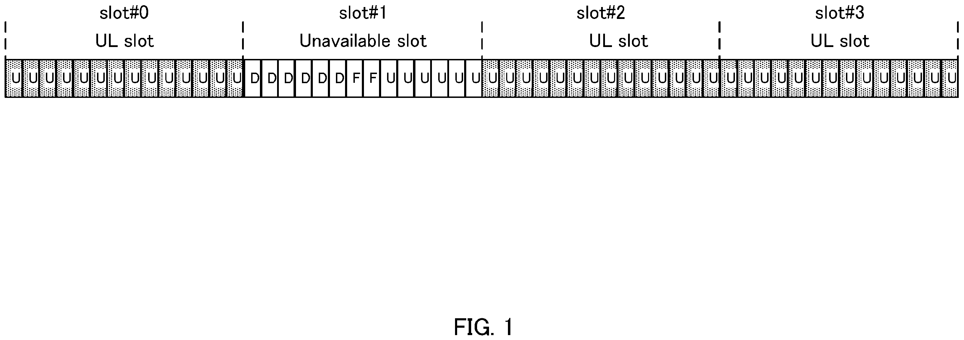

FIG. 1 illustrates an exemplary case where PUSCH start-symbol position in a slot, S = 0, the number of symbols for transmitting PUSCH, L = 14 and the number of TBoMS slots = 4 are configured, and a slot unavailable for the PUSCH transmission (e.g., slot #1) is included in consecutive multiple slots (e.g., slots #0, #1, #2, and #3). In FIG. 1, the symbols corresponding to the filled blocks represent PUSCH resources actually used for PUSCH transmission. In FIG. 1, the sign "U" represents an uplink symbol, the sign "D" represents a downlink symbol, and the sign "F" represents a flexible symbol.

As illustrated in FIG. 1, in the method in which the same time resource is allocated over the multiple slots consecutive in units of slots, the PUSCH transmission is dropped in one slot #1 of the four slots assigned to the PUSCH transmission, which may reduce the uplink-resource utilization efficiency.

As a method of improving the uplink-resource utilization efficiency in TBoMS, for example, a method is exemplified in which PUSCH is considered transmittable in an assigned slot even when the PUSCH resources in the assigned slot include at least one symbol unavailable for PUSCH transmission as long as the PUSCH resources include a specified number of symbols available for the PUSCH transmission.

In the following, a slot where PUSCH resources allocated to each of a plurality of slots configured in TBoMS include at least one symbol unavailable for PUSCH transmission and a specified number of symbols available for the PUSCH transmission is referred to as a "Collided slot." Further, among the plurality of slots configured in TBoMS, a slot different from the Collided slot (e.g., slot that does not include symbol unavailable for PUSCH transmission) is sometimes referred to as a "normal slot," for convenience. The slot name is not limited to a Collided slot and may be any other name.

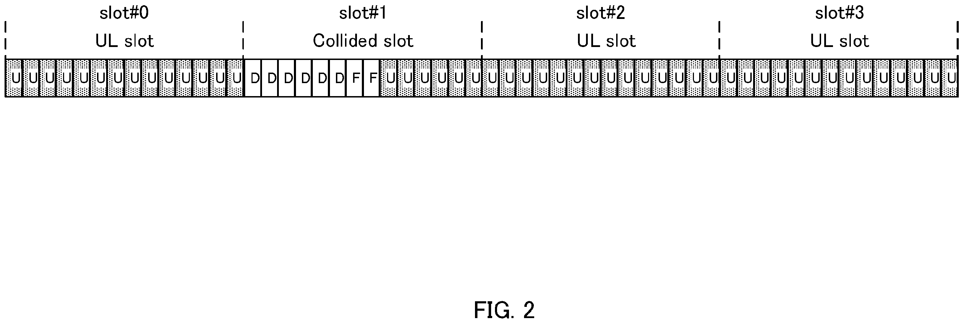

FIG. 2 illustrates an exemplary case where PUSCH start-symbol position in a slot, S = 0, the number of symbols for transmitting PUSCH, L = 14, and the number of TBoMS slots = 4 are configured, and a Collided slot (e.g., slot #1) is included in consecutive multiple slots (e.g., slots #0, #1, #2, and #3). In FIG. 2, the symbols corresponding to the filled blocks represent PUSCH resources actually used for PUSCH transmission.

As illustrated in FIG. 2, PUSCH can be transmitted using uplink symbols in the Collided slot. Thus, in FIG. 2, compared with FIG. 1, for example, a time-domain resource available for the PUSCH transmission is increased, which improves the uplink-resource utilization efficiency and brings about expectations of improvement in the PUSCH coverage performance.

Note that there is scope for study on how to use a Collided slot in TBoMS.

For example, as mentioned above, a case will be described of combining the method in which a TBS is determined by multiplying a TBS calculated from a resource amount in units of slots or a resource amount allocated for an initial PUSCH transmission in Repetition by a scaling coefficient that is greater than one and the method of reading, from a specified RV position, the number of bits corresponding to a resource amount to be allocated for the PUSCH transmission in each slot and mapping the encoded bit in each slot, as a TBS determination method and Rate matching method, respectively In this case, a resource amount to which an encoded bit can actually be mapped in a Collided slot may be less than a resource amount to which an encoded bit can be mapped in a normal slot (or resource amount allocated to Collided slot).

For this reason, for example, when the terminal maps an encoded bit to a Collided slot based on an RV position (e.g., RV0) including more systematic bits (or information bits), systematic bits in the Collided slot are not fully transmitted; thus, decoding performance for PUSCH may deteriorate.

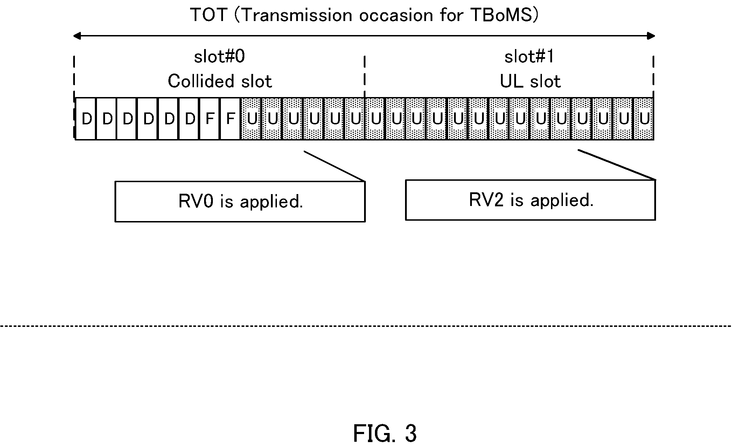

FIG. 3 illustrates an exemplary case where the number of TBoMS slots = 2 is configured, RV0 is applied to slot #0, and RV2 is applied to slot #1. When slot #0 illustrated in FIG. 3 is a Collided slot, since RV0 including more systematic bits is applied to the Collided slot with a PUSCH resource amount (6 symbols in FIG. 3) that is less than a PUSCH resource amount (14 symbols in FIG. 3) of a normal slot, systematic bits are not fully transmitted; thus, the decoding performance for PUSCH is likely to deteriorate.

In a non-limiting and exemplary embodiment of the present disclosure, a description will be given of a method of improving the uplink-resource utilization efficiency by using a Collided slot in TBoMS and also improving the decoding performance for PUSCH by transmitting systematic bits appropriately.

For example, in a non-limiting and exemplary embodiment of the present disclosure, depending on the presence or absence of a Collided slot in a time-domain resource (Transmission Occasion of TBoMS (TOT)) allocated for TBoMS, a transmission method for TBoMS (e.g., at least one of TBS determination method, RV determination method, and Rate matching method) is varied. This makes it possible to configure, in the TBoMS transmission, the PUSCH transmission suitable for the Collided slot.

(Embodiment 1)

[Overview of Communication System]

A communication system according to each embodiment of the present disclosure includes base station 100 and terminal 200.

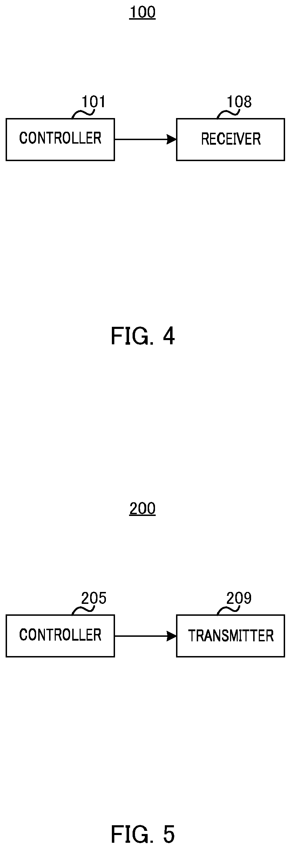

FIG. 4 is a block diagram illustrating an exemplary configuration of part of base station 100 (e.g., corresponding to communication apparatus) according to an embodiment of the present disclosure. In base station 100 illustrated in FIG. 4, controller 101 (e.g., corresponding to control circuitry) varies a configuration for transmission of a signal (e.g., TBoMS transmission configuration) between a case in which a plurality of sections (e.g., a plurality of slots) in a time-domain resource (e.g., TOT) allocated for the transmission of the signal (e.g., TBoMS transmission) includes a second section (e.g., Collided slot) and a case in which the plurality of sections does not include the second section, the second section having a less available resource amount than a first section. Receiver 108 (e.g., corresponding to reception circuitry) performs reception of the signal based on the configuration.

FIG. 5 is a block diagram illustrating an exemplary configuration of part of terminal 200 (e.g., corresponding to communication apparatus) according to an embodiment of the present disclosure. In terminal 200 illustrated in FIG. 5, controller 205 (e.g., corresponding to control circuitry) varies a configuration for transmission of a signal (e.g., TBoMS transmission configuration) between a case in which a plurality of sections (e.g., a plurality of slots) in a time-domain resource (e.g., TOT) allocated for the transmission of the signal (e.g., TBoMS transmission) includes a second section (e.g., Collided slot) and a case in which the plurality of sections does not include the second section, the second section having less available resource amount than a first section. Transmitter 209 (e.g., corresponding to transmission circuitry) performs the transmission of the signal based on the configuration.

[Configuration of Base Station]

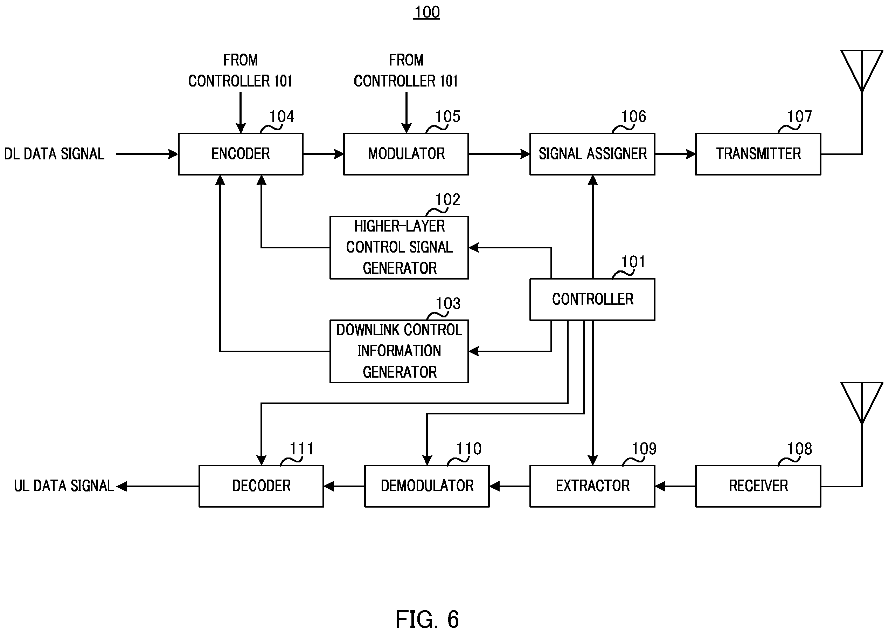

FIG. 6 is a block diagram illustrating an exemplary configuration of base station 100 according to Embodiment 1. In FIG. 6, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Controller 101 determines, for example, information on reception of a downlink data signal (e.g., PDSCH) for terminal 200 and information on transmission of an uplink data signal (e.g., PUSCH), and outputs the determined information to higher-layer control signal generator 102. The information on the reception of the downlink data signal and the information on the transmission of the uplink data signal may include, for example, information on time-domain resource allocation (e.g., Time Domain Resource Allocation (TDRA)) (e.g., information on TDRA table) or information on TBoMS (e.g., information on the number of transmission slots). Meanwhile, the information on the transmission of the uplink data signal may include, for example, information on an RV (examples thereof will be described later).

Moreover, controller 101 determines, for example, information (e.g., coding and modulation scheme (MCS) and radio resource allocation) on a downlink signal for transmitting a higher-layer control signal or downlink control information, and outputs the determined information to encoder 104, modulator 105, and signal assigner 106. Controller 101 also outputs, for example, the information on the downlink signal (e.g., higher-layer control signal) to downlink control information generator 103.

Further, controller 101 determines information (e.g., MCS and radio resource allocation) on transmission of an uplink data signal (e.g., PUSCH) in terminal 200, for example. Controller 101 outputs the determined information on the uplink data signal to downlink control information generator 103, extractor 109, demodulator 110, and decoder 111, for example. Besides, controller 101 may, for example, determine at least one of a TBS and an RV, based on whether a Collided slot is included in a time-domain resource (e.g., a plurality of slots) with which terminal 200 performs the TBoMS transmission, and output the determined information to decoder 111.

Higher-layer control signal generator 102, for example, generates a higher-layer control signal bit sequence based on the information inputted from controller 101 and outputs the higher-layer control signal bit sequence to encoder 104.

Downlink control information generator 103, for example, generates a downlink control information (e.g., DCI) bit sequence based on the information inputted from controller 101 and outputs the generated DCI bit sequence to encoder 104. Note that the control information may be transmitted to a plurality of terminals.

Encoder 104, for example, encodes downlink data (e.g., DL data signal), the bit sequence inputted from higher-layer control signal generator 102, or the DCI bit sequence inputted from downlink control information generator 103, based on the information inputted from controller 101. Encoder 104 outputs the encoded bit sequence to modulator 105.

Modulator 105, for example, modulates the encoded bit sequence inputted from encoder 104, based on the information inputted from controller 101, and outputs the modulated signal (e.g., symbol sequence) to signal assigner 106.

Signal assigner 106 maps, to a radio resource, the symbol sequence (including, e.g., downlink data signal or control signal) inputted from modulator 105, based on the information indicating the radio resource inputted from controller 101, for example. Signal assigner 106 outputs, to transmitter 107, a downlink signal to which the signal is mapped.

Transmitter 107, for example, performs transmission-waveform generation processing such as orthogonal Frequency Division Multiplexing (OFDM) on the signal inputted from signal assigner 106. In addition, for example, in the case of an OFDM transmission in which a cyclic prefix (CP) is added, transmitter 107 performs Inverse Fast Fourier Transform (IFFT) processing on the signal, and adds the CP to the signal resulting from the IFFT. Moreover, transmitter 107 performs RF processing such as D/A conversion and/or up-conversion on the signal and transmits the resulting radio signal to terminal 200 via an antenna.

Receiver 108, for example, performs RF processing such as down-conversion and/or A/D conversion on an uplink signal from terminal 200 received via an antenna. Further, in the case of the OFDM transmission, receiver 108 performs Fast Fourier Transform (FFT) processing on the received signal and outputs the resulting frequency-domain signal to extractor 109.

Extractor 109, for example, extracts, from the received signal inputted from receiver 108, based on the information inputted from controller 101, a radio resource part with which the uplink data signal (e.g., PUSCH) has been transmitted and then outputs the extracted radio resource part to demodulator 110.

Demodulator 110, for example, demodulates, based on the information inputted from controller 101, the uplink data signal (e.g., PUSCH) inputted from extractor 109. Demodulator 110, for example, outputs a demodulation result to decoder 111.

Decoder 111, for example, performs error correction decoding on the uplink data signal (e.g., PUSCH), based on the information inputted from controller 101 and the demodulation result inputted from demodulator 110, thereby obtaining a reception bit sequence (e.g., UL data signal) after the decoding.

[Configuration of Terminal]

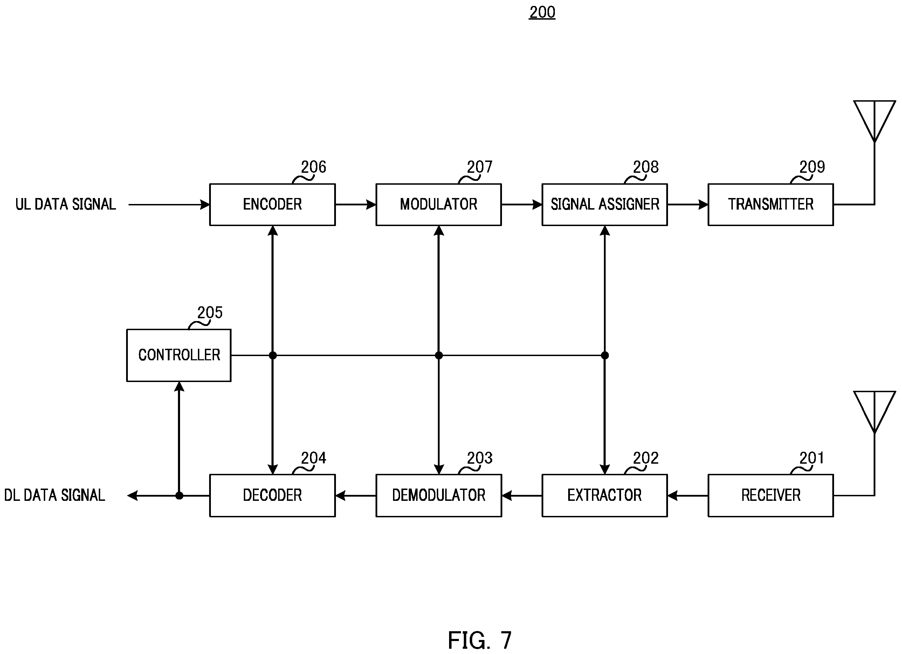

FIG. 7 is a block diagram illustrating an exemplary configuration of terminal 200 according to an exemplary embodiment of the present disclosure. For example, in FIG. 7, terminal 200 includes receiver 201, extractor 202, demodulator 203, decoder 204, controller 205, encoder 206, modulator 207, signal assigner 208, and transmitter 209.

Receiver 201, for example, receives a downlink signal (e.g., downlink data signal or downlink control information) from base station 100 via an antenna and performs the RF processing such as the down-conversion and/or the A/D conversion on the received radio signal, thereby obtains a received signal (baseband signal). Further, in the case of receiving an OFDM signal, receiver 201 performs the FFT processing on the received signal to convert the received signal into that in the frequency domain. Receiver 201 outputs the received signal to extractor 202.

Extractor 202, for example, extracts a radio resource part that may include the downlink control information from the received signal inputted from receiver 201, based on information on the radio resource for the downlink control information inputted from controller 205, and then outputs the radio resource part to demodulator 203. Further, extractor 202 extracts a radio resource part that includes downlink data, based on information on the radio resource for a data signal inputted from controller 205, and then outputs the radio resource part to demodulator 203.

Demodulator 203, for example, based on the information inputted from controller 205, demodulates the signal (e.g., PDCCH or PDSCH) inputted from extractor 202 and outputs a demodulation result to decoder 204.

Decoder 204, for example, based on the information inputted from controller 205, performs error correction decoding on PDCCH or PDSCH, using the demodulation result inputted from demodulator 203, thereby obtaining downlink reception data, a higher-layer control signal, or downlink control information, for example. Decoder 204 outputs the higher-layer control signal and the downlink control information to controller 205, and outputs the downlink reception data. Further, decoder 204 may generate a response signal (e.g., ACK/NACK), based on the decoding result of the downlink reception.

Controller 205, for example, determines a radio resource for at least one of PDSCH reception and PUSCH transmission, based on the signal inputted from decoder 204 (e.g., higher-layer control signal and downlink control information). Controller 205 outputs the determined information to extractor 202, demodulator 203, encoder 206, modulator 207, and signal assigner 208, for example.

Further, in accordance with the methods described later, for example, controller 205 may determine at least one of a TBS and an RV, based on whether a Collided slot is included in a time-domain resource (e.g., a plurality of slots) with which terminal 200 performs the TBoMS transmission, and output the determined information to encoder 206, modulator 207, and signal assigner 208.

Encoder 206, for example, performs error correction encoding on an uplink data signal, based on the information inputted from controller 205. Encoder 206 outputs the encoded bit sequence to modulator 207.

Modulator 207, for example, based on the information inputted from controller 205, modulates the encoded bit sequence inputted from encoder 206 and outputs the modulated signal (symbol sequence) to signal assigner 208.

Signal assigner 208, for example, based on the information inputted from controller 205, maps the signal inputted from modulator 207 to a radio resource. Signal assigner 208 outputs, to transmitter 209, the uplink signal to which the signal is mapped.

Transmitter 209, for example, performs transmission signal-waveform generation such as OFDM on the signal inputted from signal assigner 208. In addition, in the case of the OFDM transmission using the CP, for example, transmitter 209 performs the IFFT processing on the signal and adds the CP to the signal after the IFFT. Alternatively, when transmitter 209 generates a single-carrier waveform, a Discrete Fourier Transformer (DFT) may be additionally provided at a rear stage of modulator 207 or a front stage of signal assigner 208 (neither is illustrated), for example. Moreover, transmitter 209, for example, performs the RF processing such as the D/A conversion and/or the up-conversion on a transmission signal and transmits the resulting radio signal to base station 100 via an antenna.

[Exemplary Operations of Base Station 100 and Terminal 200]

Exemplary operations of base station 100 and terminal 200 having the above configurations will be described.

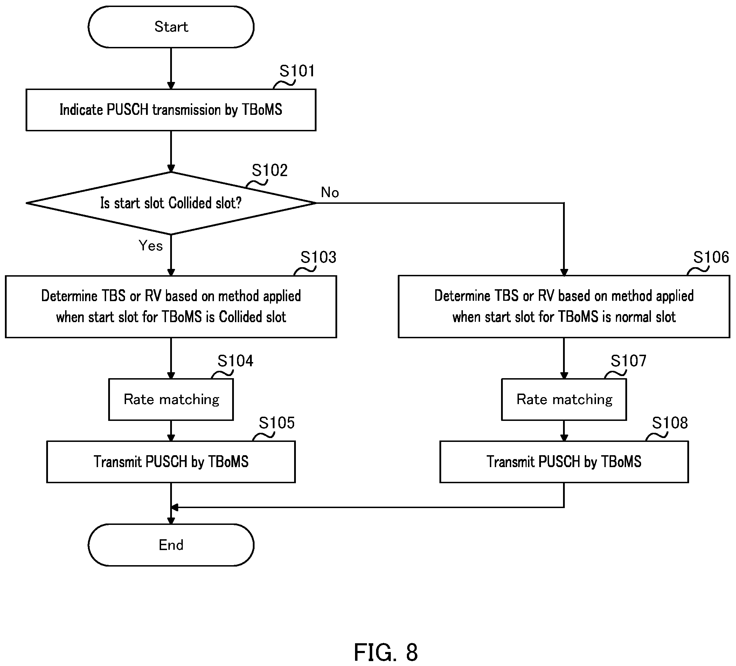

FIG. 8 is a flowchart describing an exemplary operation related to TBoMS transmission in terminal 200.

In FIG. 8, terminal 200 receives, from base station 100, an indication relating to PUSCH transmission by TBoMS (e.g., resource allocation information on TBoMS transmission) (S101).

Terminal 200, for example, determines whether a start slot of a plurality of slots corresponding to the TBoMS transmission is a Collided slot (S102).

In a case where the start slot is the Collided slot (S102: Yes), terminal 200 may determine a TBS or an RV based on a method applied when a start slot for TBoMS is a Collided slot (S103). Terminal 200 may also perform Rate matching (S104) and transmit PUSCH by TBoMS (S105).

On the other hand, in a case where the start slot is not the Collided slot (S102: No), terminal 200 may determine a TBS or an RV based on a method applied when the start slot for TBoMS is not the Collided slot (S106). Terminal 200 may also perform the Rate matching (S107) and transmit PUSCH by TBoMS (S108).

In the manner described above, terminal 200 may vary a configuration for TBoMS transmission (e.g., determination method of TBS or RV) between a case where a start slot of multiple slots for TBoMS is a Collided slot and a case where the start slot of the multiple slots for TBoMS is not the Collided slot. Moreover, base station 100, as with terminal 200, for example, may vary a reception method of TBoMS (e.g., determination method of TBS or RV) between a case where a start slot of multiple slots for TBoMS is a Collided slot and a case where the start slot of the multiple slots for TBoMS is not the Collided slot.

<Examples of RV Determination>

In the present embodiment, terminal 200 performs TBoMS transmission based on resource allocation indicated by the DCI on PDCCH from base station 100. For example, terminal 200 may determine, based on a value of an RV field included in the DCI (e.g., field related to reading position of encoded data), the RV to be applied to PUSCH transmitted in each of a plurality of slots for TBoMS.

For example, a DCI format, such as DCI format 0-0 or DCI format 0-1, including a two-bit RV field will be described.

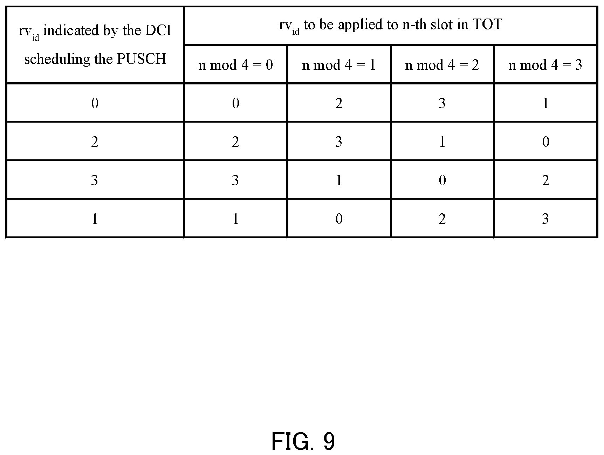

When the TBoMS transmission is scheduled by a DCI format including the two-bit RV field, an RV to be applied to the n-th slot (e.g., n = 0, 1, ..., $N_{slot}$-1) in a TOT may be given according to FIG. 9, for example.

In FIG. 9, $rv_{id}$ indicates a value of an RV field included in the DCI. A combination of RV values for four slots associated with a possible value of $rv_{id}$ illustrated in FIG. 9 (e.g., any of 0, 2, 3, and 0) is sometimes referred to as an "RV sequence" (or RV pattern). By way of example, the RV sequence corresponding to $rv_{id}$ = 0 is {0, 2, 3, 1}, the RV sequence corresponding to $rv_{id}$ = 2 is {2, 3, 1, 0} (or may be expressed as {RV2, RV3, RV1, RV0}; the same applies hereafter), the RV sequence corresponding to $rv_{id}$ = 3 is {3, 1, 0, 2}, and the RV sequence corresponding to $rv_{id}$ = 1 is {1, 0, 2, 3}.

For example, when the number of slots, $N_{slot}$, configured for the TBoMS transmission is more than four slots, an RV to be applied to the n-th slot may be determined from among RV0, RV1, RV2, and RV3 in accordance with n mod 4, as illustrated in FIG. 9.

For example, in the case of a two-bit RV field, base station 100 appropriately configures an RV field value for terminal 200 and thus can avoid a situation where PUSCH, to which RV0 is applied (hereinafter may also be PUSCH with RV0 applied), is transmitted in a Collided slot when one Collided slot is included in the TOT.

For example, terminal 200 may vary an RV field value between a case where the Collided slot is included in the ToT and a case where no Collided slot is included in the ToT.

For example, in the example of FIG. 9, when a start slot in the TOT (e.g., n = 0) is a Collided slot, base station 100 may configure a value different from $rv_{id}$ = 0 (e.g., any of $rv_{id}$ = 1, 2, and 3) to the RV field value. This allows terminal 200 to transmit PUSCH, to which an RV different from RV0, in the start slot in the TOT (e.g., n = 0). In other words, application of an RV position including more systematic bits (e.g., RV0) to the start slot in the TOT can be avoided. Further, for example, the RV position including more systematic bits (e.g., RV0) is applied to a slot different from the start slot in the TOT, which allows terminal 200 to appropriately transmit systematic bits to base station 100 even when the start slot in the TOT is the Collided slot.

Next, DCI format 0-2 will be described.

In DCI format 0-2, the number of bits in an RV field is variable between zero to two.

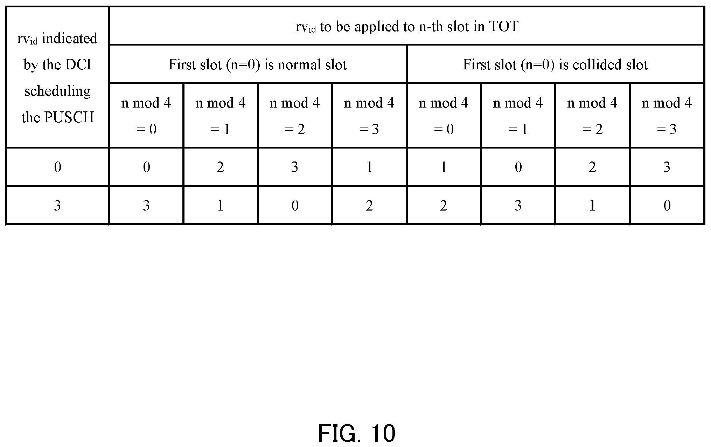

When TBoMS transmission is scheduled by a DCI format including a one-bit RV field, an RV to be applied to the n-th slot (e.g., n = 0, 1, ..., $N_{slot}$-1) in a TOT may be given according to FIG. 10, for example.

As illustrated in FIG. 10, depending on whether a start slot (n = 0) in the TOT is a Collided slot (or whether normal slot or Collided slot), RVs to be applied to the respective slots for TBoMS may be different.

For example, in FIG. 10, when a start slot for TBoMS is not a Collided slot (e.g., normal slot or slot where symbol unavailable for PUSCH transmission is not included in PUSCH resources in assigned slot) in a situation where RV0 (e.g., $rv_{id}$ = 0) is indicated to terminal 200 in an RV field, terminal 200 may transmit PUSCH by applying RV0 to the start slot (e.g., n = 0), transmit PUSCH by applying RV2 to the second slot (e.g., n = 1), transmit PUSCH by applying RV3 to the third slot (e.g., n = 2), and transmit PUSCH by applying RV1 to the fourth slot (e.g., n = 3).

On the other hand, in FIG. 10, when the start slot for TBoMS is the Collided slot in a situation where RV0 is indicated to terminal 200 in an RV field, terminal 200 may transmit PUSCH by applying RV1 to the start slot (e.g., n = 0), transmit PUSCH by applying RV0 to the second slot (e.g., n = 1), transmit PUSCH by applying RV2 to the third slot (e.g., n = 2), and transmit PUSCH by applying RV3 to the fourth slot (e.g., n = 3).

As illustrated in FIG. 10, terminal 200 may make, different from each other, RVs respectively for multiple slots of a case where the start slot of the multiple slots in the TOT is the Collided slot and RVs respectively for multiple slots of a case where the start slot of the multiple slots in the TOT is not the Collided slot.

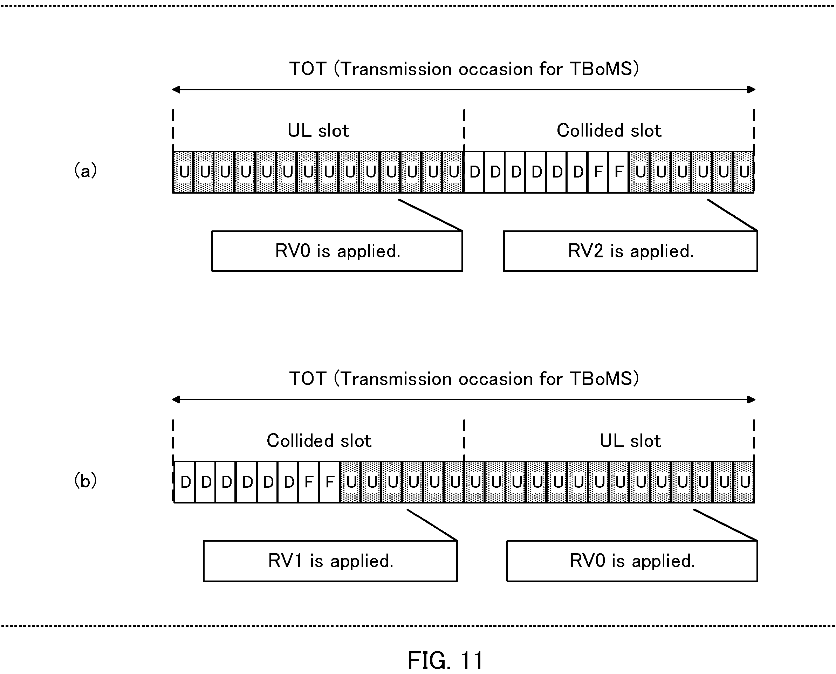

FIG. 11, illustrates an exemplary case where PUSCH start-symbol position in a slot, S = 0, the number of symbols for transmitting PUSCH, L = 14, and the number of TBoMS slots = 2 are configured, which includes a case where no Collided slot is included in a plurality of slots (e.g., (a) of FIG. 11) and a case where a Collided slot (e.g., start slot) is included (e.g., (b) of FIG. 11).

For example, as illustrated in (b) of FIG. 11, when the start slot in the TOT is the Collided slot, PUSCH with RV0 applied is transmitted in the second slot different from the start slot that is the Collided slot. In other words, PUSCH with RV0 applied is avoided from being transmitted in the Collided slot.

Further, for example, as illustrated in (a) of FIG. 11, when a slot different from the start slot in the TOT is a Collided slot, PUSCH with RV0 applied is transmitted in the start slot that is not the Collided slot, by a configuration for an RV field. In other words, PUSCH with RV0 applied is avoided from being transmitted in the Collided slot.

Next, a case will be described where the TBoMS transmission is scheduled by a DCI format including a zero-bit RV field.

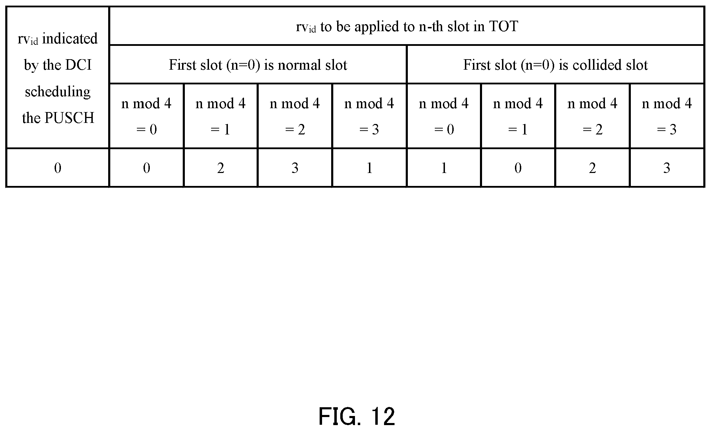

When the TBoMS transmission is scheduled by the DCI format including the zero-bit RV field, an RV to be applied to the n-th slot (e.g., n = 0, 1, ..., $N_{slot}$-1) in a TOT may be given according to FIG. 12, for example.

As illustrated in FIG. 12, depending on whether a start slot (n = 0) in the TOT is a Collided slot (or whether normal slot or Collided slot), RVs to be applied to the respective slots for TBoMS may be different.

For example, in FIG. 12, when a start slot for TBoMS is not a Collided slot (e.g., normal slot or slot where symbol unavailable for PUSCH transmission is not included in PUSCH resources in assigned slot), terminal 200 may transmit PUSCH by applying RV0 to the start slot (e.g., n = 0), transmit PUSCH by applying RV2 to the second slot (e.g., n = 1), transmit PUSCH by applying RV3 to the third slot (e.g., n = 2), and transmit PUSCH by applying RV1 to the fourth slot (e.g., n = 3).

On the other hand, in FIG. 12, when the start slot for TBoMS is the Collided slot, terminal 200 may transmit PUSCH by applying RV1 to the start slot (e.g., n = 0), transmit PUSCH by applying RV0 to the second slot (e.g., n = 1), transmit PUSCH by applying RV2 to the third slot (e.g., n = 2), and transmit PUSCH by applying RV3 to the fourth slot (e.g., n = 3).

As illustrated in FIG. 12, terminal 200 may make, different from each other, RVs respectively for multiple slots of a case where the start slot of the multiple slots in the TOT is the Collided slot and RVs respectively for multiple slots of a case where the start slot of the multiple slots in the TOT is not the Collided slot.

In the example illustrated in FIG. 12 as well, for example, as illustrated in (b) of FIG. 11, when the start slot in the TOT is the Collided slot, PUSCH with RV0 applied is transmitted in the second slot different from the start slot that is the Collided slot. In other words, PUSCH with RV0 applied is avoided from being transmitted in the Collided slot. Further, in the example illustrated in FIG. 12 as well, for example, as illustrated in (a) of FIG. 11, when a slot different from the start slot in the TOT is a Collided slot, PUSCH with RV0 applied is transmitted in the start slot that is not the Collided slot, by a configuration for an RV field. In other words, PUSCH with RV0 applied is avoided from being transmitted in the Collided slot.

Note that, in DCI format 0-2, when the DCI format includes a two-bit RV field, an RV field may be configured in the same manner as in the above-described DCI format, such as DCI format 0-0 or DCI format 0-1, including a two-bit RV field.

Alternatively, in DCI format 0-0, DCI format 0-1, or DCI format 0-2, when the DCI format includes a two-bit RV field, an RV to be applied to each slot for TBoMS may be varied between a case where a start slot (n = 0) in a TOT is a Collided slot and a case where the start slot in the TOT is not the Collided slot, as in the above-described DCI format including a zero-bit or one-bit RV field.

The exemplary RV determination methods have been each described, thus far.

According to the present embodiment, terminal 200, for example, varies a TBoMS transmission method (e.g., RV determination method) between a case where a plurality of slots in a ToT includes a Collided slot (e.g., slot having less time-domain resource amount than normal slot) and a case where the plurality of slots in the ToT includes no Collided slot. In addition, base station 100, as with terminal 200, varies a TBoMS reception method (e.g., RV determination method) between a case where the Collided slot is included in the ToT and a case where no Collided slot is included.

With this RV determination method, for example, in terminal 200, PUSCH with RV0 applied is avoided from being transmitted in the Collided slot independent of the number of bits of an RV field included in the DCI, thereby suppressing deterioration of the decoding performance for PUSCH due to the insufficient transmission of systematic bits. In other words, since the systematic bits are likely to be transmitted in a slot (e.g., normal slot) different from the Collided slot of multiple slots for TBoMS, the decoding performance for PUSCH can be improved.

Therefore, according to the present embodiment, in TBoMS, it is possible to improve the uplink-resource utilization efficiency by using a Collided slot and also improve the decoding performance for PUSCH by appropriately transmitting systematic bits.

Note that, in the present embodiment, the RV sequence is not limited to the above-described examples. For example, as an RV sequence, when a start slot for TBoMS is a Collided slot, at least one RV sequence may be included in which the RV for the n = 1st (second) slot, which is next to the start slot (n = 0), will be RV0. When a start slot in a TOT is a Collided slot, for example, terminal 200 may determine the RV for the slot next to the start slot as an RV (e.g., RV0) corresponding to a systematic bit of encoded data. For example, in a situation where the number of slots to be configured for TBoMS is two, even when a start slot for TBoMS is a Collided slot, PUSCH with RV0 applied can be transmitted in the n = 1st (second) slot, thus suppressing the deterioration of the decoding performance for PUSCH.

(Variation 1)

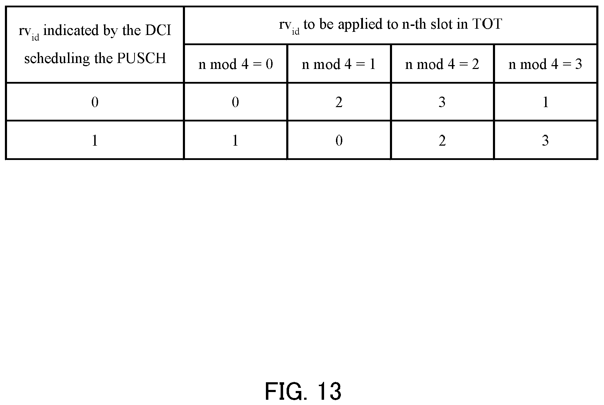

In Variation 1, when TBoMS transmission is scheduled by a DCI format including a one-bit RV field, an RV to be applied to the n-th slot (e.g., n = 0, 1, ..., $N_{slot}$-1) in a TOT may be given according to FIG. 13, for example.

In the example illustrated in FIG. 13, an RV sequence (e.g., $rv_{id}=1$) may be included in which an RV different from RV0 (e.g., RV1) is applied to a start slot (n = 0) in the TOT and RV0 is applied to the second slot (n = 1).

This can avoid transmission of PUSCH with RV0 applied in a Collided slot even when a start slot for TBoMS is the Collided slot. Moreover, even when the number of slots configured for TBoMS is two, PUSCH with RV0 applied can be transmitted in the second slot.

Further, in the RV determination method illustrated in FIG. 13, for example, since it is unnecessary to vary an RV to be applied to each slot for TBoMS depending on whether the start slot (n = 0) in the TOT is the Collided slot, processing in terminal 200 can be simplified.

(Embodiment 2)

The configurations of the base station and the terminal according to the present embodiment may be the same as the configurations of base station 100 and terminal 200 according to Embodiment 1.

In Embodiment 1, a case has been described where terminal 200 performs the TBoMS transmission based on resource allocation (also referred to as, e.g., dynamic grant PUSCH) indicated by the DCI from the base station. In the present embodiment, a case will be described where terminal 200 performs the TBoMS transmission (also referred to as, e.g., Configured grant PUSCH) based on resource allocation previously specified (or configured) by base station 100. By way of example, terminal 200 may determine the RV to be applied to PUSCH transmitted in each of multiple slots for TBoMS, based on a parameter related to an RV and included in RRC (referred to as higher layer signalling or higher layer parameter).

For example, the Configured grant PUSCH includes two types of methods (Type 1 and Type 2) depending on how to specify resources.

Type 1 (also called Configured grant Type 1) is a method in which a plurality of transmission parameters, such as a transmission resource period, a time resource, and a frequency resource, are previously configured for terminal 200 by RRC that is Layer 3. In Type 1, after the configuration of the transmission parameters, terminal 200 can transmit PUSCH without resource allocation indicated by the DCI.

Type 2 (also called Configured grant Type 2) is a method in which, in addition to the pre-configuration of the transmission parameters by RRC, specification of some transmission parameters, such as the time resource and the frequency resource, is indicated by the DCI on PDCCH (also called activation DCI, for example). In Type 2, the transmission parameters for terminal 200 can be semi-persistently changed.

Further, in the Configured grant PUSCH, terminal 200 may determine the RV to be applied to PUSCH transmitted in each slot for TBoMS, based on a parameter related to an RV sequence and configured by RRC (e.g., "TBoMS-RV"). For example, RV sequences configurable by a parameter related to an RV sequence and configured by RRC (TBoMS-RV) may be {0, 0, 0, 0}, {0, 3, 0, 3}, and {0, 2, 3, 1}, as in NR Rel. 15/16. Note that the RV sequences configurable by the parameter for the RV sequence (TBoMS-RV) are not limited to these and may be other RV sequences.

When a start slot for TBoMS is not a Collided slot (e.g., normal slot or slot where symbol unavailable for PUSCH transmission is not included in PUSCH resources in assigned slot), for example, terminal 200 may transmit PUSCH by applying an RV sequence that is configured based on a parameter related to an RV sequence and configured by RRC (TBoMS-RV). For example, an RV to be applied to the n-th slot in a TOT (e.g., n = 0, 1, ..., $N_{slot}$-1) may be configured to a value of the (mod (n-1, 4) +1)-th element of the RV sequence configured by RRC.

In one example, when the RV sequence {0, 0, 0, 0} is configured for terminal 200, terminal 200 may transmit PUSCH by applying RV0 to a start slot (n = 0) in a TOT. Additionally, terminal 200 may transmit PUSCH by applying RV0 in each of the slots where n = 1, n = 2, and n = 3, for example.

Further, for example, when the RV sequence {0, 3, 0, 3} is configured for terminal 200, terminal 200 may transmit PUSCH by applying RV0 to the start slot (n = 0). Additionally, terminal 200 may transmit PUSCH by applying RV3 to the slot where n = 1, transmit PUSCH by applying RV0 in the slot where n = 2, and transmit PUSCH by applying RV3 in the slot where n = 3, for example.

Further, for example, when the RV sequence {0, 2, 3, 1} is configured for terminal 200, terminal 200 may transmit PUSCH by applying RV0 to the start slot (n = 0). Additionally, terminal 200 may, for example, transmit PUSCH by applying RV2 to the slot where n = 1, transmit PUSCH by applying RV3 in the slot where n = 2, and transmit PUSCH by applying RV1 in the slot where n = 3.

Meanwhile, when the start slot for TBoMS is the Collided slot and the RV sequence {0, 0, 0, 0} is configured by RRC, for example, terminal 200 may transmit PUSCH by applying the RV sequence {0, 0, 0, 0} configured by RRC, as in a case where the start slot for TBoMS is not the Collided slot. For example, an RV to be applied to the n-th slot in a TOT (e.g., n = 0, 1, ..., $N_{slot}$-1) may be configured to a value of the (mod (n-1, 4) +1)-th element of the RV sequence configured by RRC. By way of example, terminal 200 may transmit PUSCH by applying RV0 to each of the slots where n = 0, n = 1, n = 2, and n = 3.

Further, when the start slot for TBoMS is the Collided slot and the RV sequence {0, 3, 0, 3} or {0, 2, 3, 1} is configured by RRC, for example, terminal 200 may transmit PUSCH by applying, to the n-th slot (e.g., n = 0, 1, ..., $N_{slot}$-1) in the TOT, an RV of a value of the mod (n-1, 4)-th element of the RV sequence configured by RRC.

In one example, when the RV sequence {0, 3, 0, 3} is configured for terminal 200, terminal 200 may transmit PUSCH by applying RV3 to the start slot (n = 0). Similarly, terminal 200 may transmit PUSCH by applying RV0 to the slot where n = 1, transmit PUSCH by applying RV3 in the slot where n = 2, and transmit PUSCH by applying RV0 in the slot where n = 3, for example.

Further, for example, when the RV sequence {0, 2, 3, 1} is configured for terminal 200, terminal 200 may transmit PUSCH by applying RV1 to the start slot (n = 0). Similarly, terminal 200 may transmit PUSCH by applying RV0 to the slot where n = 1, transmit PUSCH by applying RV2 in the slot where n = 2, and transmit PUSCH by applying RV3 in the slot where n = 3, for example.

In the manner described above, terminal 200 may make, different from each other, RVs respectively for multiple slots of a case where the start slot of the multiple slots in the TOT is the Collided slot and RVs respectively for multiple slots of a case where the start slot of the multiple slots in the TOT is not the Collided slot.

This can avoid transmission of PUSCH with RV0 applied in a Collided slot when a start slot for TBoMS is the Collided slot. In other words, in TBoMS, PUSCH with RV0 applied can be transmitted in a slot (e.g., normal slot) different from the Collided slot.

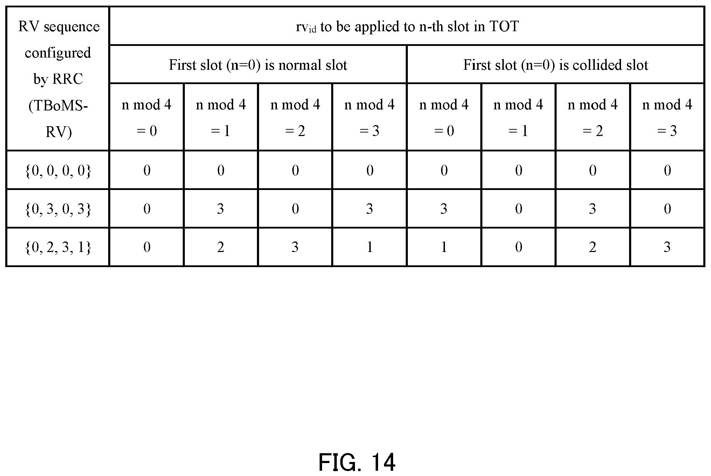

The determination method of the RV to be applied to each slot in the TOT is not limited to the method based on the above-described (mod (n-1, 4) + 1)-th element of the RV sequence configured by RRC or the (mod (n-1, 4))-th element of the RV sequence configured by RRC. For example, an RV to be applied to the n-th slot (n = 0, 1, ..., $N_{slot}$-1) in the TOT may be given according to FIG. 14.

As illustrated in FIG. 14, depending on an RV sequence configured by RRC and whether a start slot (n = 0) in a TOT is a Collided slot (or whether normal slot or Collided slot), RVs to be applied to the respective slots for TBoMS may be different.

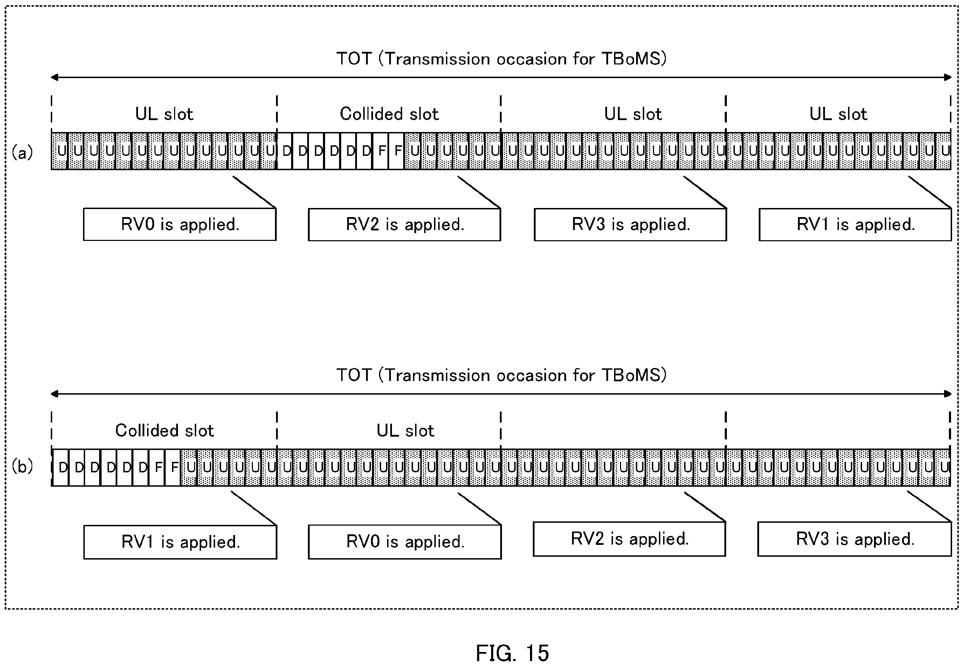

FIG. 15 illustrates an example of configuring RVs when the RV sequence {0, 2, 3, 1} is configured for terminal 200 by RRC.

As illustrated in (a) of FIG. 15, when the start slot in the TOT is not a Collided slot, RVs to be applied to the slots where n=0, n=1, n=2, and n=3 may be configured to RV0, RV2, RV3, and RV1, respectively. On the other hand, as illustrated in (b) of FIG. 15, when the start slot in the TOT is a Collided slot, RVs to be applied to the slots where n=0, n=1, n=2, and n=3 may be configured to RV1, RV0, RV2, and RV3, respectively. As illustrated in (a) and (b) of FIG. 15, an RV different from RV0 is applied to a Collided slot, thus suppressing transmission of PUSCH with RV0 applied in the Collided slot. In other words, as illustrated in (a) and (b) of FIG. 15, PUSCH with RV0 applied is likely to be transmitted in a slot different from the Collided slot.

According to the present embodiment, terminal 200, for example, varies a TBoMS transmission method (e.g., RV determination method) between a case where a plurality of slots in a ToT includes a Collided slot (e.g., slot having less time-domain resource amount than normal slot) and a case where the plurality of slots in the ToT includes no Collided slot. In addition, base station 100, as with terminal 200, varies a TBoMS reception method (e.g., RV determination method) between a case where the Collided slot is included in the ToT and a case where no Collided slot is included.

With this RV determination method, for example, in a situation where the RV sequence {0, 3, 0, 3} or {0, 2, 3, 1} is configured for terminal 200, PUSCH with RV0 applied is avoided from being transmitted in a Collided slot even when a start slot in a TOT is the Collided slot. Moreover, when one Collided slot is included in a slot different from the start slot in the TOT, PUSCH with RV0 applied is avoided from being transmitted in the Collided slot.

Thus, according to the present embodiment, in the Configured grant PUSCH, terminal 200 can transmit PUSCH with RV0 applied in a slot (e.g., normal slot) different from a Collided slot independent of an RV sequence configured by RRC, thereby suppressing deterioration of the decoding performance due to the insufficient transmission of systematic bits.

Therefore, according to the present embodiment, in TBoMS, it is possible to improve the uplink-resource utilization efficiency by using a Collided slot and also improve the decoding performance for PUSCH by appropriately transmitting systematic bits.

Meanwhile, for example, when the RV sequence {0, 0, 0, 0} is configured, PUSCH with RV0 applied is transmitted in a Collided slot, but PUSCH with RV0 applied is transmitted also in another slot (e.g., normal slot), thereby suppressing the deterioration of the decoding performance due to the insufficient transmission of systematic bits.

Incidentally, when an RV sequence is not configured for terminal 200 by RRC, terminal 200 may transmit PUSCH by applying the same RV as in a case where the RV sequence {0, 0, 0, 0} is configured, for example.

In addition, in the present embodiment, RV sequences are not limited to the above-described examples. In one example, as an RV sequence, when a start slot for TBoMS is a Collided slot, at least one RV sequence may be included in which an RV to be applied to PUSCH in a start slot (n = 0) is an RV different from RV0 and an RV for the n = 1st slot, which is next to the start slot, is RV0. When a start slot in a TOT is a Collided slot, for example, terminal 200 may determine the RV for the slot next to the start slot as an RV (e.g., RV0) corresponding to a systematic bit of encoded data. For example, in a situation where the number of slots to be configured for TBoMS is two, even when a start slot for TBoMS is a Collided slot, PUSCH with RV0 applied can be transmitted in the n = 1st (second) slot, thus suppressing the deterioration of the decoding performance for PUSCH.

(Variation 2)

For terminal 200, another RV sequence may be configured by RRC, in addition to or in place of any one of RV sequences {0, 0, 0, 0}, {0, 3, 0, 3}, and {0, 2, 3, 1}.

For example, the other RV sequence to be configured may include an RV sequence in which an RV to be applied to PUSCH in a start slot (n = 0) is an RV different from RV0 and an RV to be applied to PUSCH in the n = 1st slot, which is next to the start slot, is RV0.

When a start slot for TBoMS is not a Collided slot, for example, terminal 200 may transmit PUSCH by applying any one of the RV sequences {0, 0, 0, 0}, {0, 3, 0, 3}, and {0, 2, 3, 1} configured by RRC. On the other hand, when the start slot for TBoMS is the Collided slot, for example, terminal 200 may transmit PUSCH by applying an additional RV sequence.

According to Variation 2, for example, terminal 200 need not to perform the processing of deriving, from the RV sequences such as {0, 0, 0, 0}, {0, 3, 0, 3}, and {0, 2, 3, 1}, an RV sequence to be configured when the start slot for TBoMS is the Collided slot, thus simplifying processing in terminal 200.

(Variation 3)

In Configured grant Type 2, in addition to the pre-configuration by RRC, the specification of some transmission parameters, such as the time resource and the frequency resource, can be semi-persistently changed by the DCI transmitted in PDCCH (e.g., Activation DCI).

In Variation 3, the Activation DCI may include an RV field including information on the RV to be applied to PUSCH transmitted in each slot for TBoMS, for example. Terminal 200 may, for example, determine the RV to be applied to PUSCH transmitted in each slot for TBoMS, based on the RV field included in the Activation DCI.

As the RV determination method based on the RV field included in the Activation DCI, the method of Embodiment 1 may be applied, for example.

Incidentally, in NR Rel. 15/16, no RV field is included in an Activation DCI, for example. Further, in NR Rel. 15/16, an RV field is configured with a fixed value and used for PDCCH validation, for example. By way of example, an RV field may be configured for an Activation DCI for TBoMS whereas the RV field may not be configured for an Activation DCI for PUSCH transmission different from and other than TBoMS. Alternatively, for the Activation DCI for the PUSCH transmission different from and other than TBoMS, an RV field is configured with a fixed value and used for the PDCCH validation.

(Embodiment3)

The configurations of the base station and the terminal according to the present embodiment may be the same as the configurations of base station 100 and terminal 200 according to Embodiment 1.

In the present embodiment, when a start slot (n = 0) for TBoMS is a Collided slot, terminal 200 may configure a "Virtual slot" in which the start Collided slot and the next slot (n = 1) are associated in one unit. Terminal 200 may apply the processing for TBoMS (e.g., at least one of TBS determination, RV determination, and Rate matching) in units of virtual slots, for example.

On the other hand, when the start slot for TBoMS is not the Collided slot (e.g., normal slot or slot where symbol unavailable for PUSCH transmission is not included in PUSCH resources in assigned slot), terminal 200 may apply the processing for TBoMS (e.g., at least one of TBS determination, RV determination, and Rate matching) in units of slots, for example.

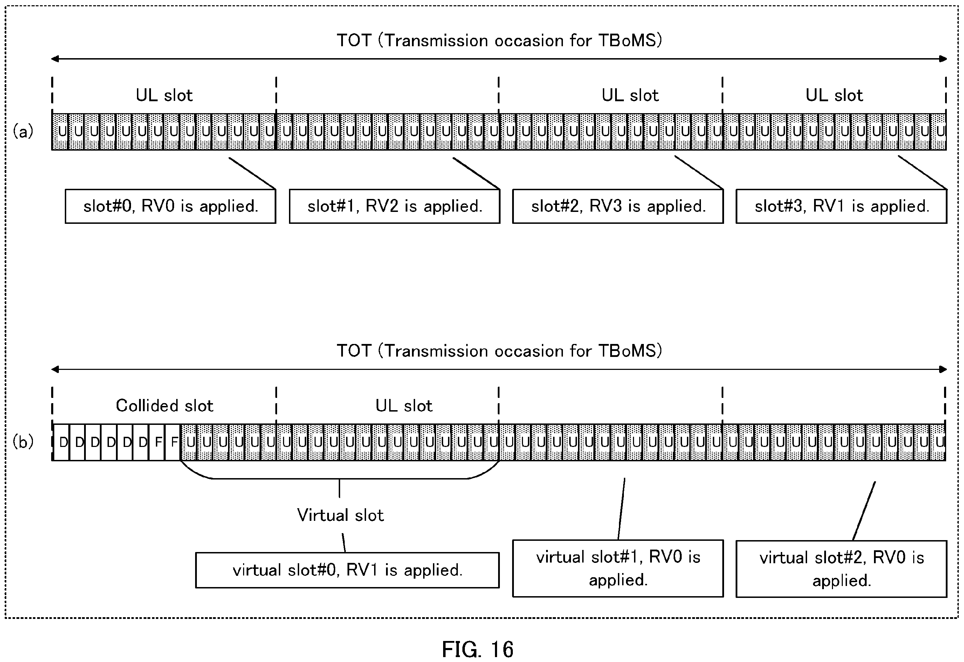

FIG. 16 illustrates an exemplary operation of TBoMS when $N_{slot}$ = 4.

As illustrated in (a) of FIG. 16, when a start slot for TBoMS is not a Collided slot, TBoMS may be configured with a slot of $N_{slot}$ pieces (e.g., slot #0 to slot #$N_{slot}$-1). In (a) of FIG. 16, terminal 200 may apply a TBoMS transmission method (e.g., RV determination method) in unit of slots, for example.

On the other hand, as illustrated in (b) of FIG. 16, when the start slot (n = 0) for TBoMS is the Collided slot, a virtual slot including the Collided slot and the slot where n = 1 is configured. In this case, as illustrated in (b) of FIG. 16, TBoMS is configured with a virtual slot of $N_{slot}$-1 pieces (e.g., virtual slot#0 to slot #$N_{slot}$-2). In (b) of FIG. 16, terminal 200 may apply a TBoMS transmission method (e.g., RV determination method) in units of virtual slots, for example.

Note that the TBoMS transmission method is not limited to the RV determination method and may include a TBS determination method on PUSCH or a Rate matching method.

[TBS Determination Method for PUSCH Transmission (TBoMS) using Multiple Slots]

A TBS may be determined, for example, by multiplying a TBS calculated from a resource amount (e.g., the number of symbols or resource elements (REs)) allocated for PUSCH transmission in a start slot or a start virtual slot in a ToT by a scaling coefficient that is greater than one. For example, the resource amount (the number of REs), $N_{RE}$, allocated for the PUSCH transmission in the start slot or the start virtual slot may be calculated based on the following Equation 1:

$$N_{RE} = \min(156, N'_{RE})\, n_{PRB} \qquad ... \text{(Equation 1)}.$$

In Equation 1, the upper limit of the number of REs in a slot is set to 156, for example. Note that the upper limit value of the number of REs in the slot is not limited to 156 and may be other values.

In Equation 1, $n_{PRB}$ is the number of resource blocks allocated for PUSCH transmission. Further, in Equation 1, $N'_{RE}$ may be calculated based on, for example, the following Equation 2:

$$N'_{RE} = N_{sc}^{RB} N_{symbol}^{sh} - N_{DMRS}^{RPB} - N_{oh}^{PRB} \qquad ... \text{(Equation 2)}.$$

The following are used, herein:

$N_{sc}^{RB}$ : Number of subcarriers per resource block (e.g., 12);

$N_{symbol}^{sh}$ : Number of OFDM symbols allocated for PUSCH transmission in start slot or start virtual slot;

$N_{DMRS}^{RPB}$ : Number of Demodulation Reference Signal (DMRS) resource elements allocated for PUSCH transmission in start slot or start virtual slot; and

$N_{oh}^{PRB}$ : Overhead coefficient indicated to terminal 200 by RRC.

For example, the number of OFDM symbols allocated for PUSCH transmission in a start slot or a start virtual slot may be indicated to terminal 200 by information on a symbol length of time-domain resource allocation (TDRA).

ATB size, $N_{info}$, may be calculated, by using the resource amount, $N_{RE}$, allocated for the PUSCH transmission in the start slot or the start virtual slot that has been calculated by Equation 1, based on the following Equation 3:

$$N_{info} = N_{RE} \cdot R \cdot Q_m \cdot \upsilon \cdot K \qquad ... \text{(Equation 3)}.$$

The following are used, herein:

$R$: Coding rate;
$Q_m$: Modulation order;
$\upsilon$: Number of MIMO layers; and
$K$: Scaling coefficient greater than one.

As described above, terminal 200 may vary a TBS determination method between a case where a Collided slot is included in the ToT and a case where no Collided slot is included in the ToT. For example, terminal 200 may determine a TBS in units of virtual slots when the Collided slot is included in the ToT, and may determine a TBS in units of slots when no Collided slot is included in the ToT.

Note that the above-described TBS determination method may be applied to other embodiments.

[Rate Matching Method for PUSCH Transmission (TBoMS) using Multiple Slots]

For example, terminal 200 may vary a Rate matching method between a case where a Collided slot is included in a ToT and a case where no Collided slot is included in the ToT. By way of example, terminal 200 may perform the Rate matching in units of virtual slots when the Collided slot is included in the ToT, and may perform the Rate matching in units of slots when no Collided slot is included in the ToT.

For example, terminal 200 may read, from a specified RV position, the number of bits corresponding to a resource amount to be allocated for PUSCH transmission in a slot or a virtual slot and then map the number of bits to a PUSCH resource for each slot.

For example, RVs to be applied may be different between slots or between virtual slots.

The exemplary Rate matching method has been described, thus far.

According to the present embodiment, for example, when a start slot in a TOT is a Collided slot, configuring a virtual slot can avoid PUSCH transmission in units of Collided slots, which have less resource amount than a normal slot, thereby suppressing deterioration of the decoding performance for PUSCH due to the insufficient transmission of systematic bits.

The TBoMS transmission method according to the present embodiment may be applied to either a case where terminal 200 transmits TBoMS based on resource allocation indicated by the DCI on PDCCH from base station 100 or a case where terminal 200 transmits TBoMS based on resource allocation specified in advance by base station 100 (case of Configured grant PUSCH). For example, when one virtual slot is configured with a start slot and the next slot, an RV determination method for a case where a start slot is not a Collided slot, in the RV determination methods of Embodiment 1 or Embodiment 2, may be applied.

In addition, an RV determination method of either Embodiment 1 or Embodiment 2 may be applied to the TBoMS transmission method according to the present embodiment. For example, when one virtual slot is configured with a start slot and the next slot, an RV determination method for a case where a start slot is not a Collided slot, in the RV determination methods of either Embodiment 1 or Embodiment 2 may be applied.

The embodiments according to an exemplary embodiment of the present disclosure have been each described, thus far.

(Variation 4)

In the above-described embodiments, a case has been described where a TBoMS transmission method is varied depending on whether a start slot (n = 0) in a TOT is a Collided slot, but in Variation 4, terminal 200 may vary a TBoMS transmission method depending on the presence or absence of a Collided slot when the number of multiple slots in a TOT is less than or equal to a threshold.

By way of example, an operation of each embodiment or variation may be applied when the number of slots included in the TOT is equal to or less than the threshold, whereas the operation of each embodiment or variation need not be applied when the number of slots included in the TOT is greater than the threshold.

Further, for example, an embodiment and a variation to be applied may be varied (i.e., may be switched) based on the number of slots included in the TOT.

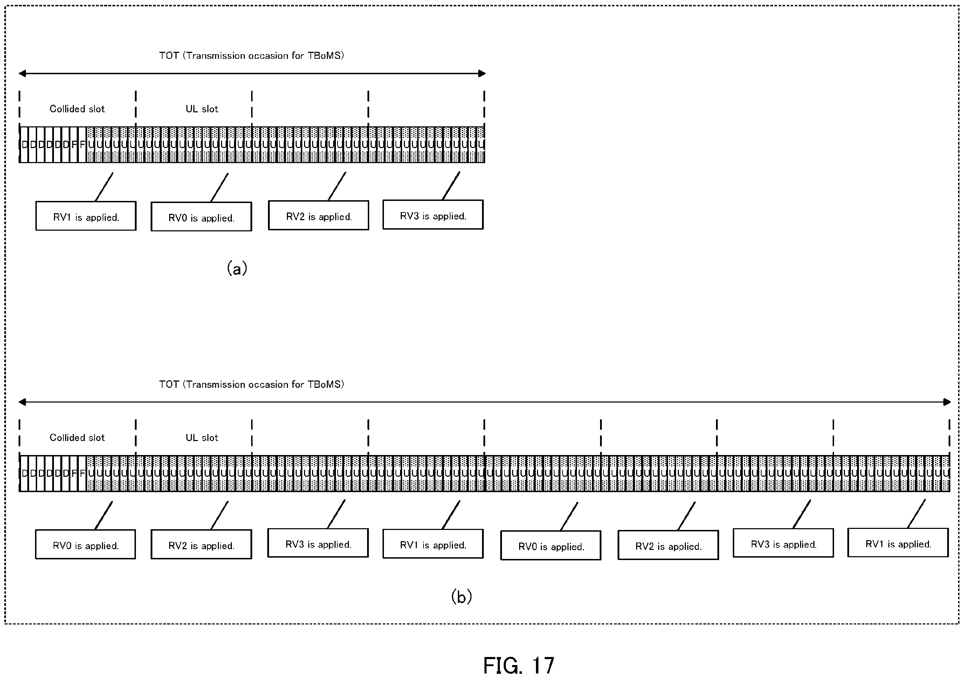

For example, as illustrated in (a) of FIG. 17, when the number of slots included in the TOT is four or less, a TBoMS transmission method in each embodiment or each variation may be applied. For example, in (a) of FIG. 17, RV1 different from RV0 may be applied to the start slot in the ToT.

On the other hand, as illustrated in (b) of FIG. 17, when the number of slots included in the TOT is larger than four (eight slots in (b) of FIG. 17), the TBoMS transmission method in each embodiment or each variation need not be applied. In one example, when the number of slots included in the TOT is larger than four, the same TBoMS transmission method as in a case where the start slot (n = 0) in the TOT is not a Collided slot may be applied.

For example, when the number of slots included in the TOT is large (e.g., larger than four slots), PUSCH with RV0 applied can be transmitted in the start Collided slot, but PUSCH with RV0 is transmitted even in another slot (e.g., later normal slot). In one example, in (b) of FIG. 17, RV0 is applied to the start slot (Collided slot), but RV0 is also applied to another slot (fifth slot). Thus, when the number of slots included in the TOT is large (e.g., larger than threshold), it is possible to suppress deterioration of the decoding performance due to the insufficient transmission of systematic bits.

The threshold of the number of slots (e.g., four slots in the example of FIG. 17) may be configured to, for example, a value based on a sequence length of an RV sequence. In one example, when the number of slots included in the TOT is larger than the sequence length of the RV sequence, an RV is easily applied repeatedly in the TOT as illustrated in (b) of FIG. 17, and thus, RV0 is easily applied to another slot even when RV0 is applied to the Collided slot, thereby suppressing the deterioration of the decoding performance due to the insufficient transmission of systematic bits.

(Variation 5)

In Variation 5, for example, a TBS determination method may be varied depending on whether a start slot (n = 0) in a TOT is a Collided slot.

[Method 1]

In Method 1, for example, a scaling coefficient "K" greater than one in Equation 3 may be varied depending on whether the start slot (n=0) in the TOT is the Collided slot. Alternatively, the scaling coefficient, K, may be varied depending on whether the start slot is a normal slot or a virtual slot.

For example, a Collided slot has less resource amount than a normal slot. Therefore, when the start slot is the Collided slot, a TBS serving as reference (e.g., TBS based on Collided slot; hereinafter referred to as a "reference TBS") is smaller than a TBS based on the normal slot. Thus, for example, a scaling coefficient when the start slot is the Collided slot may be configured to a value greater than a scaling coefficient when the start slot is the normal slot.

Further, for example, since a virtual slot is configured with a Collided slot and another slot (e.g., normal slot), it is assumed that a resource amount of the virtual slot is greater than that of the normal slot. Therefore, when a virtual slot is configured as in Embodiment 3, a reference TBS (e.g., TBS based on start virtual slot) becomes larger than a TBS based on a normal slot. Accordingly, for example, a scaling coefficient when the virtual slot is configured may be configured to a value smaller than a scaling coefficient when the start slot is the normal slot.

Thus, according to Method 1, a TBS (e.g., scaling coefficient) can be appropriately configured depending on whether a start slot is a Collided slot.

[Method 2]

In the [TBS Determination Method for PUSCH Transmission (TBoMS) using Multiple Slots] described in Embodiment 3, a description has been given of a case where a TBS is determined by multiplying a TBS calculated from a resource amount allocated for PUSCH transmission in a start slot or a start virtual slot by a scaling coefficient that is greater than one. That is, a slot serving as reference of TBS calculation (hereinafter referred to as a "reference slot for TBS calculation") is a start slot regardless of whether a start slot is a Collided slot.

In Method 2, for example, the reference slot for the TBS calculation may be configured to the first normal slot in a TOT.

In one example, when a start slot is a normal slot, the reference slot for the TBS calculation may be configured to the start slot. On the other hand, when the start slot is a Collided slot, the reference slot for the TBS calculation may be configured to a normal slot that is different from the start slot. For example, when the start slot is the Collided slot, a normal slot in an earlier timing may be configured as the reference for the TBS calculation.

According to Method 2, a TBS is calculated with reference to a normal slot regardless of whether a start slot is a Collided slot, and thus, a scaling coefficient need not be adjusted depending on whether the start slot is the Collided slot, for example.

[Method 3]

In TBoMS, as one of time-domain resource indication methods to be described later, there may be a method of indicating a plurality of pieces of information on time-domain resource allocation. An example of the information on the time-domain resource allocation includes, a Start symbol and allocation Length Indicator Value (SLIV) that indicates information on a PUSCH start-symbol position in a slot and the number of symbols for transmitting PUSCH.

For example, an example of the indication method of a plurality of SLIVs includes a case of individually indicating the SLIV for each slot in a TOT or a case of indicating different SLIVs for a normal slot and for a Collided slot.

In these cases, for example, a reference slot for the TBS calculation may be configured to, among the plurality of slots, the slot to which a value of the largest symbol length (L) is indicated. Thus, a TBS in TBoMS can be appropriately configured.

[Method 4]

A Collided slot includes a certain number of symbols available for PUSCH transmission even when at least one symbol of PUSCH resources in an assigned slots is a symbol unavailable for the PUSCH transmission.

In Method 4, for example, a reference slot for the TBS calculation may be configured to the slot having the largest number of symbols available for the PUSCH transmission. This allows a TBS in TBoMS to be appropriately configured based on a resource amount actually used for the PUSCH transmission.

Methods 1 to 4 have been each described, thus far.

According to Variation 5, even when a Collided slot is included in a TOT, a TBS can be calculated while suppressing an impact of the Collided slot which has a less resource amount than a normal slot.

(Variation 6)

In Embodiment 1 and Embodiment 2, a description has been given of how to vary an RV to be applied to each slot for TBoMS depending on whether a start slot (n = 0) in a TOT is a Collided slot.

In Variation 6, an RV (e.g., RV sequence) to be applied when a start slot for TBoMS is a Collided slot may be a sequence in which an RV sequence applied to a case where the start slot for TBoMS is not the Collided slot (e.g., normal slot or slot where symbol unavailable for PUSCH transmission is not included in PUSCH resources in assigned slot) is re-ordered.

In other words, a combination of RVs (e.g., RV sequence) applied respectively to a plurality of slots when a start slot of the plurality of slots in a TOT is a Collided slot may be a combination resulting from varying the order of RVs applied respectively to the plurality of slots when the start slot of the plurality of slots in the TOT is not the Collided slot.

For example, when the RV sequence {0, 2, 3, 1} is given to terminal 200, an RV sequence to be applied when a start slot for TBoMS is a Collided slot may be the sequence {1, 3, 2, 0} resulting from reversing the order in the given RV sequence.

Further, for example, when the RV sequence {0, 2, 3, 1} is given to terminal 200, an RV sequence to be applied when a start slot for TBoMS is a Collided slot may be the sequence {3, 2, 1, 0} resulting from sorting the RV values in the descending order.

Further, when the number of slots for TBoMS is less than the number of RVs included in an RV sequence, terminal 200 may extract an RV sequence to be applied for the TBoMS transmission from a tail of the RV sequence and apply the extracted RV sequence. For example, when the RV sequence {1, 3, 2, 0} is used in a case where a start slot for TBoMS is a Collided slot, terminal 200 may transmit TBoMS by using {2, 0} at the tail of the RV sequence when the number of slots for TBoMS is two.

According to Variation 6, when a start slot in a TOT is a Collided slot, an RV different from RV0 is applied, so that PUSCH with RV0 applied is avoided from being transmitted in the Collided slot. In addition, since PUSCH with RV0 applied is transmitted in a slot different from the start slot for TBoMS, deterioration of the decoding performance due to the insufficient transmission of systematic bits can be suppressed.

(Variation 7)

In Embodiment 1, a description has been given of how to avoid PUSCH with RV0 applied from being transmitted in a Collided slot independent of the number of bits of an RV field included in the DCI.

In Embodiment 1, a method has been described in which, when the number of bits of an RV field is two, base station 100 appropriately configures an RV field and thus can avoid a situation where PUSCH with RV0 applied is transmitted in a Collided slot when one Collided slot is included in a TOT.

Meanwhile, in Variation 7, for example, a two-bit RV field may be fixedly configured in a DCI for scheduling TBoMS. On the other hand, in a DCI for PUSCH transmission different from TBoMS, the number of bits of an RV field may be configured to be variable or smaller than two.

Further, for example, when a start slot is a Collided slot, the two-bit RV field may be fixedly configured in the DCI for scheduling TBoMS.

(Variation 8)

In Variation 8, when PUSCH with RV0 applied is transmitted in a Collided slot, the RV to be applied to PUSCH in the next slot to the Collided slot need not be changed. For example, when PUSCH with RV0 applied is transmitted in a Collided slot, PUSCH with RV0 applied may be transmitted also in the next slot to the Collided slot.

Thus, when PUSCH with RV0 applied is transmitted in a Collided slot, PUSCH with RV0 applied is transmitted also in the next slot to the Collided slot (e.g., normal slot), so that it is possible to suppress deterioration of the decoding performance due to the insufficient transmission of systematic bits.

(Variation 9)

In Embodiment 1 or Embodiment 2, a case has been described where an RV sequence to be applied is varied depending on whether a start slot for TBoMS is a Collided slot. Further, in an RV sequence of Embodiment 1 or Embodiment 2, when the start slot for TBoMS is the Collided slot, an RV sequence in which the RV to be applied to PUSCH in the n = 1-th (second) slot is RV0 may be included, for example.

Here, a case can be assumed where not only a start slot for TBoMS, but also multiple slots from the start of TBoMS are Collided slots. In Variation 9, an RV sequence to be applied when a start slot for TBoMS is a Collided slot may be varied depending on the number of consecutive Collided slots from the start slot in a TOT.

By way of example, an RV to be applied when the start slot for TBoMS is the Collided slot may be a sequence in which an offset that is based on the number of consecutive Collided slots from the start slot in a TOT is added to an RV sequence to be applied when the start slot for TBoMS is not the Collided slot (e.g., normal slot or slot where symbol unavailable for PUSCH transmission is not included in PUSCH resources in assigned slot).

For example, when the RV sequence {0, 2, 3, 1} is given to terminal 200, an RV sequence to be applied when the single start slot for TBoMS is the Collided slot may be {1, 0, 2, 3}, which is obtained by adding an offset (-1) to the given RV sequence.

Further, for example, when the RV sequence {0, 2, 3, 1} is given to terminal 200, an RV sequence to be applied when first two start slots for TBoMS are Collided slots may be {3, 1, 0, 2}, which is obtained by adding an offset (-2) to the given RV sequence.

When the number of consecutive Collided slots from the start slot for TBoMS is three or more, an RV sequence may be configured in the same manner.

Thus, when multiple slots from the beginning in a TOT are Collided slots, PUSCH with RV0 applied is avoided from being transmitted in the Collided slots.

(Variation 10)

A parameter for determining an RV sequence may be included in an information element (IE) of RRC that configures information on a time-domain resource for transmitting PUSCH.

Terminal 200 may determine the RV to be applied to each slot based on, for example, resource allocation information included in the DCI or RRC and the above-described parameter for the RV sequence determination.

Here, the information element of RRC that configures the information on the time-domain resource for transmitting PUSCH may be, for example, "PUSCH-TimeDomainResourceAllocation IE" (e.g., see NPL 9). The PUSCH-TimeDomainResourceAllocation may include, for example, information on the timing (e.g., slot offset) from the slot in which the terminal has received PDCCH to the slot in which terminal 200 transmits PUSCH, and parameters for the PUSCH start-symbol position in a slot, the number of symbols for transmitting PUSCH, and the number of TBoMS slots. Candidates (e.g., TDRA table) for a combination of these parameters may be configured for terminal 200. Terminal 200 may select one of the plurality of candidates for parameter combination actually used for PUSCH transmission, based on few-bit information of the DCI or RRC that assigns the corresponding uplink data channel (PUSCH), for example.

Besides, for example, the parameter for the RV sequence determination (e.g., RV-sequence) may be included in the PUSCH-TimeDomainResourceAllocation IE in order to make this parameter one of the parameters configured by the TDRA table. This allows terminal 200 to, for example, determine an RV sequence based on indication of the time-domain resource allocation for PUSCH, so that the RV sequence can be appropriately configured depending on whether a start slot for TBoMS is a Collided slot.

Incidentally, the information indicated by the parameter for the RV sequence determination may be an RV sequence itself or an offset value to be added to the above-mentioned RV sequence.

The variations have been each described, thus far. The TBoMS transmission method according to each variation described above may be applied to either a case where terminal 200 transmits TBoMS in accordance with resource allocation indicated by the DCI on PDCCH from base station 100 or a case where terminal 200 transmits TBoMS in accordance with resource allocation specified in advance by base station 100 (case of Configured grant PUSCH).

Incidentally, in a non-limiting and exemplary embodiment of the present disclosure, a case has been described where a TBoMS transmission method (e.g., at least one of TBS determination method, RV determination method, and Rate matching method) is varied depending on whether a Collided slot is included in a time-domain resource (TOT) to be allocated for TBoMS. Herein, whether a slot to be assigned for TBoMS is the Collided slot may be determined (or judged) as follows.

For example, even when at least one symbol of PUSCH resources in the slot assigned by the TDRA is a symbol unavailable for PUSCH transmission as long as a specified number of symbols available for the PUSCH transmission is included, base station 100 and terminal 200 may determine that the slot is available for TBoMS transmission and determine the slot as a Collided slot. For example, the Collided slot may be a slot in which a resource amount (e.g., the number of symbols) available for the PUSCH transmission is less than an allocated resource amount. Herein, the number of symbols that is available for the PUSCH transmission and is included in the Collided slot may be one or another number of symbols (e.g., two).

In addition, the present disclosure is not limited to a case where a Collided slot is determined in accordance with the number of symbols available or unavailable for PUSCH transmission based on the above-described TDRA. In one example, base station 100 and terminal 200 may determine whether a slot assigned for TBoMS is a Collided slot, based on whether all (or a specified number) of systematic bits can be transmitted when RV0 is applied. For example, the Collided slot may be a slot in which a resource amount (e.g., the number of symbols) available for the PUSCH transmission is less than a resource amount used for transmission of systematic bits. In other words, even when the resource amount available for the PUSCH transmission in a slot is less than an allocated resource amount, a slot where an available resource amount is equal to or greater than the resource amount used for the transmission of the systematic bits may be configured to a normal slot.

By way of example, even when at least one symbol of PUSCH resources in a slot assigned by the TDRA is a symbol unavailable for PUSCH transmission as long as a certain number of symbols available for the PUSCH transmission is included and $N_{info}/(Q_m \cdot v) > N_{RE}$, the slot may be configured to a Collided slot.

Herein, $N_{info}$ indicates a TB size, $Q_m$ indicates a modulation order, v indicates the number of MIMO layers, and $N_{RE}$ indicates the number of resource elements in a slot assigned for the PUSCH transmission.

Further, in a non-limiting and exemplary embodiment of the present disclosure, the information on the time-domain resource for transmitting TBoMS may be included in, for example, an information element of RRC that configures the information on the time-domain resource for transmitting PUSCH (e.g., PUSCH-TimeDomainResourceAllocation). The information on the time-domain resource for transmitting TBoMS may include, for example, information on the timing (e.g., slot offset) from the slot in which the terminal has received PDCCH to the slot in which terminal 200 transmits PUSCH, and parameters for the PUSCH start-symbol position in a slot, the number of symbols for transmitting PUSCH, and the number of TBoMS slots. Candidates (e.g., TDRA table) for a combination of these parameters may be configured for terminal 200. Terminal 200 may select one of the plurality of candidates for parameter combination actually used for PUSCH transmission, based on few-bit information of the DCI or RRC that assigns the corresponding uplink data channel (PUSCH), for example.

Incidentally, a plurality of SLIVs indicating the information on a PUSCH start-symbol position in a slot and the number of symbols for transmitting PUSCH may be included in a TDRA table. For example, the SLIV for the respective slots may be indicated by individual parameters. Moreover, for example, SLIVs for a normal slot and for a Collided slot may be indicated by individual parameters.

Further, an SLIV indicating the information on a PUSCH start-symbol position in a slot and the number of symbols for transmitting PUSCH may be indicated by the same parameter, regardless of whether a normal slot or a Collided slot. In this case, a Collided slot includes a specified number of symbols available for PUSCH transmission even when at least one symbol of PUSCH resources in a slot assigned by the TDRA is a symbol unavailable for the PUSCH transmission.

For example, time-domain resource allocation for PUSCH in a Collided slot may be given by puncturing an unavailable symbol of PUSCH resources allocated by the TDRA. In one example, when the TDRA indicates time-domain resource allocation of L = 14 symbols and the number of symbols available for PUSCH transmission is 7, terminal 200 may configure PUSCH where L = 14 symbols in a Collided slot and then transmit PUSCH after puncturing the unavailable symbol.

Further, the time-domain resource allocation for PUSCH in a Collided slot may be given in the same manner as in Segmentation in PUSCH Repetition Type B in NR Rel.16, for example. By way of example, the time-domain resource for PUSCH may be given in accordance with the number of symbols available for PUSCH transmission. In one example, when the TDRA indicates time-domain resource allocation of L = 14 symbols and the number of symbols available for the PUSCH transmission is 7, terminal 200 may configure and transmit PUSCH where L = 7 symbols in a Collided slot.

Further, in a non-limiting and exemplary embodiment of the present disclosure, a description has been given of a case of determining whether a start slot for TBoMS is a Collided slot, but a position of the Collided slot in TBoMS is not limited to the start slot for TBoMS and may be at least one of multiple slots for TBoMS. For example, when any of slots in a TOT is a Collided slot, base station 100 and terminal 200 may apply the above-described embodiments or variations to the slot. By way of example, base station 100 and terminal 200 may determine an RV based on a method to avoid the application of RV0 (e.g., RV that may include more systematic bits) to the Collided slot of the multiple slots for TBoMS.

Further, in a non-limiting and exemplary embodiment of the present disclosure, a ToT may be configured with a time-domain resource over a plurality of slots or may be configured with a time-domain resource not over a plurality of slots.

Further, in a non-limiting and exemplary embodiment of the present disclosure, a PUSCH resource available for PUSCH transmission in a Collided slot may include not only an uplink symbol (U) but also a flexible symbol (F).

In addition, in a non-limiting and exemplary embodiment of the present disclosure, the information on the association of an RV field to be indicated from base station 100 to terminal 200 and an RV sequence is not limited to the example expressed in a table format such as in FIGS. 9, 10, and 12 to 14, and, for example, the RV sequence may be given according to a mathematical expression.

Further, in a non-limiting and exemplary embodiment of the present disclosure, TBoMS transmission has been described as an exemplary PUSCH transmission using multiple slots, but the PUSCH transmission using the multiple slots is not limited to the TBoMS transmission and may be other transmission methods. Moreover, transmission using multiple slots is not limited to the transmission of PUSCH and may be transmission of other channels or signals.

For example, the communication apparatus that performs transmission of data is not limited to terminal 200 and may be base station 100. Similarly, the communication apparatus that performs reception of data is not limited to base station 100 and may be terminal 200. In other words, the embodiments or variations may be applied to either one or both of an uplink communication and a downlink communication.

Further, the names of the information elements or the names of the parameters configured for the information elements used in a non-limiting and exemplary embodiment of the present disclosure are exemplary, and other names may be possible. The values of the parameters described in the embodiments or variations, such as the number, combination, and order of RVs included in an RV sequence, and the number of candidates for the RV sequence, or the number of slots configuring TBoMS, the number of Collided slots, and the number of symbols in a slot, are exemplary, and other values may be possible.

In the description of the above-described embodiments, the term such as "part" or "portion" or the term ending with a suffix such as "-er" "-or" or "-ar" may be interchangeably replaced with another term, such as "circuit (circuitry)," "device," "unit," or "module."

(Complements)

Information indicating whether terminal 200 supports the functions, operations, or processes that have been described in the above-mentioned embodiments and variations may be transmitted (or indicated) from terminal 200 to base station 100, as capability information or a capability parameter for terminal 200, for example.

The capacity information may include information elements (IEs) that individually indicate whether terminal 200 supports at least one of the functions, operations, or processes that have been described in the above-mentioned embodiments and variations. Alternatively, the capability information may include information elements that indicate whether terminal 200 supports a combination of any two or more of the functions, operations, or processes that have been described in the above-mentioned embodiments and variations.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. By way of example, base station 100 may control TBoMS transmission, based on the capability information received from terminal 200.

Note that, in a case where terminal 200 does not entirely support the functions, operations, or processes described in the above-mentioned embodiments and variations, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may serve as a base station. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large latency compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

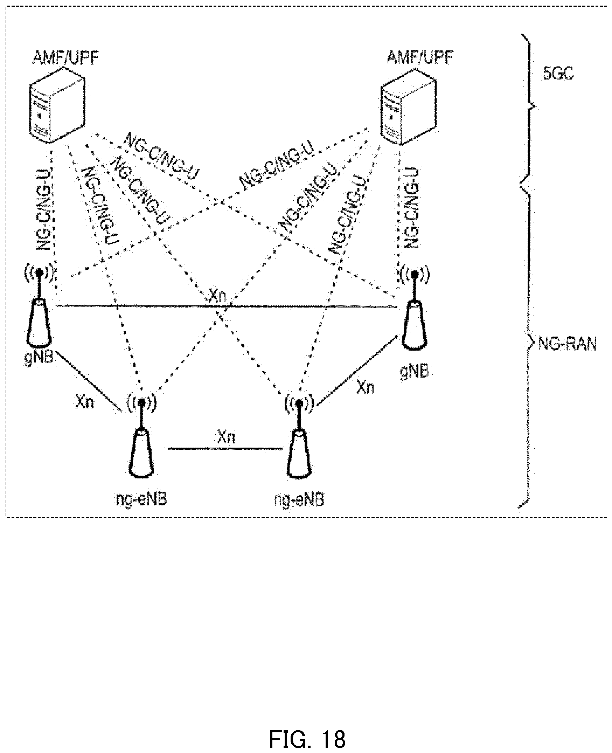

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 18 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). Acontrol plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

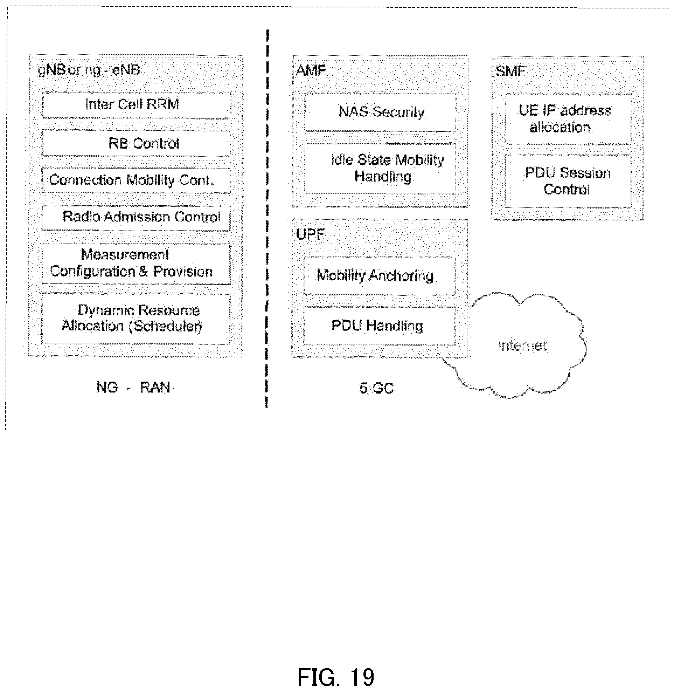

FIG. 19 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

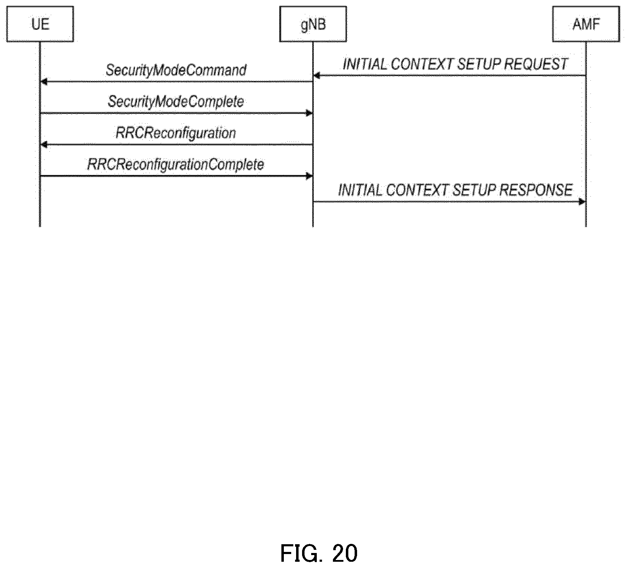

FIG. 20 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a Security-ModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

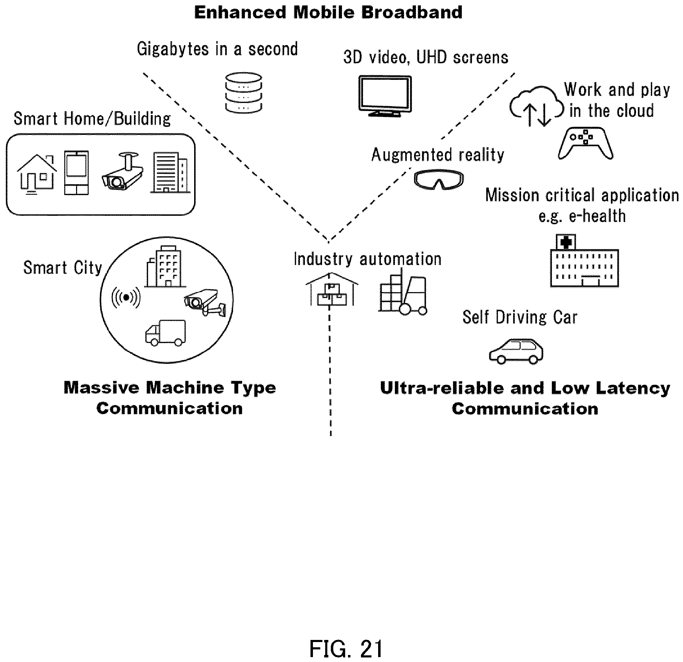

FIG. 21 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 21 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few $\mu$s (where the value can be one or a few $\mu$s depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 20. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

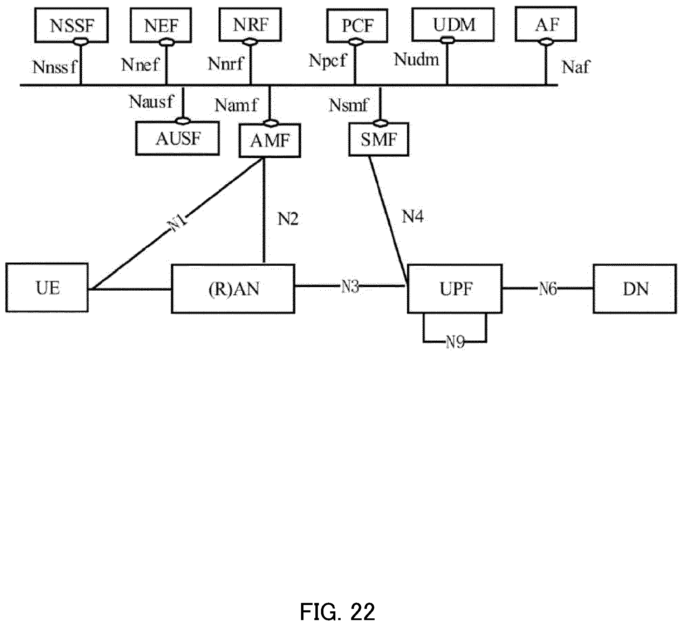

FIG. 22 illustrates a 5G NR non-roaming reference architecture (see TS 23.501 v16.1.0, section 4.23). An Application Function (AF) ( e.g., an external application server hosting 5G services, exemplarily described in FIG. 21) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 22 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto.

The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A communication apparatus according to an exemplary embodiment of the present disclosure includes: control circuitry, which, in operation, varies a configuration for transmission of a signal between a case in which a plurality of sections in a time-domain resource allocated for the transmission of the signal includes a second section and a case in which the plurality of sections does not include the second section, the second section having a less available resource amount than a first section; and transmission circuitry, which, in operation, performs the transmission of the signal based on the configuration.

In an exemplary embodiment of the present disclosure, the configuration includes a configuration for a reading position of encoded data of the signal, and

the control circuitry makes, different from each other, a plurality of the reading positions respectively for the plurality of sections in a case where a start section in the time-domain resource is the second section and the plurality of reading positions respectively for the plurality of sections in a case where the start section in the time-domain resource is not the second section.

In an exemplary embodiment of the present disclosure, the control circuitry determines the plurality of reading positions respectively for the plurality of sections, based on a value of a field related to the reading position and included in downlink control information.

In an exemplary embodiment of the present disclosure, the control circuitry determines the plurality of reading positions respectively for the plurality of sections, based on a parameter related to the reading position and included in higher layer signaling.

In an exemplary embodiment of the present disclosure, in a case where the start section is the second section, the control circuitry determines the reading position for a section next to the start section, as a reading position corresponding to an information bit of the encoded data.

In an exemplary embodiment of the present disclosure, a combination of the plurality of reading positions applied respectively to the plurality of sections when the start section is the second section is a combination resulting from varying an order of the plurality of reading positions applied respectively to the plurality of sections when the start section is not the second section.

In an exemplary embodiment of the present disclosure, in a case where a start section is the second section in the plurality of sections, the control circuitry applies the configuration in a unit including the start section and a section next to the start section.

In an exemplary embodiment of the present disclosure, the control circuitry varies the configuration depending on the presence or absence of the second section in the time-domain resource, in a case where the number of the plurality of sections is equal to or less than a threshold.

In an exemplary embodiment of the present disclosure, the configuration includes at least one of a configuration for a transport block size for the signal, a configuration for a reading position of encoded data of the signal, and/or a configuration for rate matching.

In an exemplary embodiment of the present disclosure, the second section is a slot in which a resource amount available for the transmission of the signal is less than an allocated resource amount.

In an exemplary embodiment of the present disclosure, the second section is a slot in which a resource amount available for the transmission of the signal is less than a resource amount used for transmission of an information bit of encoded data.

A communication apparatus according to an exemplary embodiment of the present disclosure includes: control circuitry, which, in operation, varies a configuration for transmission of a signal between a case in which a plurality of sections in a time-domain resource allocated for the transmission of the signal includes a second section and a case in which the plurality of sections does not include the second section, the second section having a less available resource amount than a first section; and reception circuitry, which, in operation, performs reception of the signal based on the configuration.

A communication method according to an exemplary embodiment of the present disclosure includes: varying, by a communication apparatus, a configuration for transmission of a signal between a case in which a plurality of sections in a time-domain resource allocated for the transmission of the signal includes a second section and a case in which the plurality of sections does not include the second section, the second section having a less available resource amount than a first section; and performing, by the communication apparatus, the transmission of the signal based on the configuration.

A communication method according to an exemplary embodiment of the present disclosure includes: varying, by a communication apparatus, a configuration for transmission of a signal between a case in which a plurality of sections in a time-domain resource allocated for the transmission of the signal includes a second section and a case in which the plurality of sections does not include the second section, the second section having a less available resource amount than a first section; and performing, by the communication apparatus, reception of the signal based on the configuration.

The disclosure of Japanese Patent Application No. 2021-079832, filed on May 10, 2021, including the specification, drawings and abstract, is incorporated herein by reference in its entirety.

Industrial Applicability

An exemplary embodiment of the present disclosure is useful for radio communication systems.

Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

**Claims**

1. A communication apparatus, comprising:

   control circuitry, which, in operation, varies a configuration for transmission of a signal between a case in which a plurality of sections in a time-domain resource allocated for the transmission of the signal includes a second section and a case in which the plurality of sections does not include the second section, the second section having a less available resource amount than a first section; and
   transmission circuitry, which, in operation, performs the transmission of the signal based on the configuration.

2. The communication apparatus according to claim 1, wherein:

   the configuration includes a configuration for a reading position of encoded data of the signal, and
   the control circuitry makes, different from each other, a plurality of the reading positions respectively for the plurality of sections in a case where a start section in the time-domain resource is the second section and the plurality of reading positions respectively for the plurality of sections in a case where the start section in the time-domain resource is not the second section.

3. The communication apparatus according to claim 2, wherein the control circuitry determines the plurality of reading positions respectively for the plurality of sections, based on a value of a field related to the reading position and included in downlink control information.

4. The communication apparatus according to claim 2, wherein the control circuitry determines the plurality of reading positions respectively for the plurality of sections, based on a parameter related to the reading position and included in higher layer signaling.

5. The communication apparatus according to claim 2, wherein, in a case where the start section is the second section, the control circuitry determines the reading position for a section next to the start section, as a reading position corresponding to an information bit of the encoded data.

6. The communication apparatus according to claim 2, wherein a combination of the plurality of reading positions applied respectively to the plurality of sections when the start section is the second section is a combination resulting from varying an order of the plurality of reading positions applied respectively to the plurality of sections when the start section is not the second section.

7. The communication apparatus according to claim 1, wherein, in a case where a start section is the second section in the plurality of sections, the control circuitry applies the configuration in a unit including the start section and a section next to the start section.

8. The communication apparatus according to claim 1, wherein the control circuitry varies the configuration depending on the presence or absence of the second section in the time-domain resource, in a case where the number of the plurality of sections is equal to or less than a threshold.

9. The communication apparatus according to claim 1, wherein the configuration includes at least one of a configuration for a transport block size for the signal, a configuration for a reading position of encoded data of the signal, and/or a configuration for rate matching.

10. The communication apparatus according to claim 1, wherein the second section is a slot in which a resource amount available for the transmission of the signal is less than an allocated resource amount.

11. The communication apparatus according to claim 1, wherein the second section is a slot in which a resource amount available for the transmission of the signal is less than a resource amount used for transmission of an information bit of encoded data.

12. A communication apparatus, comprising:

   control circuitry, which, in operation, varies a configuration for transmission of a signal between a case in which a plurality of sections in a time-domain resource allocated for the transmission of the signal includes a second section and a case in which the plurality of sections does not include the second section, the second section having a less available resource amount than a first section; and

reception circuitry, which, in operation, performs reception of the signal based on the configuration.

13. A communication method, comprising:

varying, by a communication apparatus, a configuration for transmission of a signal between a case in which a plurality of sections in a time-domain resource allocated for the transmission of the signal includes a second section and a case in which the plurality of sections does not include the second section, the second section having a less available resource amount than a first section; and

performing, by the communication apparatus, the transmission of the signal based on the configuration.

14. A communication method, comprising:

varying, by a communication apparatus, a configuration for transmission of a signal between a case in which a plurality of sections in a time-domain resource allocated for the transmission of the signal includes a second section and a case in which the plurality of sections does not include the second section, the second section having a less available resource amount than a first section; and

performing, by the communication apparatus, reception of the signal based on the configuration.

| slot#0 | slot#1 | slot#2 | slot#3 |
|---|---|---|---|
| UL slot | Unavailable slot | UL slot | UL slot |

U U U U U U U U U U U U U U | D D D D D D D F F U U U U U U | U U U U U U U U U U U U U U | U U U U U U U U U U U U U U

**FIG. 1**

| slot#0 | slot#1 | slot#2 | slot#3 |
|--------|--------|--------|--------|
| UL slot | Collided slot | UL slot | UL slot |

FIG. 2

TOT (Transmission occasion for TBoMS)

| slot#0 | slot#1 |
|---|---|
| Collided slot | UL slot |

D D D D D D F F U U U U U U U U U U U U U U U U U U U U U U U U

RV0 is applied.

RV2 is applied.

FIG. 3

100

CONTROLLER 101 → RECEIVER 108

FIG. 4

200

CONTROLLER 205 → TRANSMITTER 209

FIG. 5

FIG. 6

EP 4 340 493 A1

EP 4 340 493 A1

```
                                  206            207              208               209
UL DATA SIGNAL ─────────▶  ENCODER  ──▶  MODULATOR  ──▶  SIGNAL ASSIGNER  ──▶  TRANSMITTER
                              ▲              ▲                 ▲
                              │              │                 │
                    205       │              │                 │
          CONTROLLER ─────────●──────────────●─────────────────●
                ▲             │              │                 │
                │             ▼              ▼                 ▼
                │  204                203               202            201
DL DATA SIGNAL ◀──●── DECODER ◀── DEMODULATOR ◀── EXTRACTOR ◀── RECEIVER
```

FIG. 7

```
                            ┌─────────┐
                            │  Start  │
                            └─────────┘
                                 │
                                 │              S101
          ┌──────────────────────────────────────────┐
          │    Indicate PUSCH transmission by TBoMS    │
          └──────────────────────────────────────────┘
                                 │
                                 │         S102
                                 ▼
                    ◇─────────────────────────◇        No
                  <    Is start slot Collided slot?    >────────────────────┐
                    ◇─────────────────────────◇                            │
                            │ Yes                                           │
                            │                    S103                       │                S106
          ┌──────────────────────────────────────┐      ┌──────────────────────────────────────┐
          │  Determine TBS or RV based on method   │      │  Determine TBS or RV based on method   │
          │  applied when start slot for TBoMS     │      │  applied when start slot for TBoMS     │
          │  is Collided slot                      │      │  is normal slot                        │
          └──────────────────────────────────────┘      └──────────────────────────────────────┘
                            │         S104                          │         S107
                    ┌──────────────┐                        ┌──────────────┐
                    │ Rate matching │                        │ Rate matching │
                    └──────────────┘                        └──────────────┘
                            │         S105                          │         S108
          ┌──────────────────────────┐            ┌──────────────────────────┐
          │   Transmit PUSCH by TBoMS  │            │   Transmit PUSCH by TBoMS  │
          └──────────────────────────┘            └──────────────────────────┘
                            │                                   │
                            │◄──────────────────────────────────┘
                            ▼
                       ┌─────────┐
                       │   End   │
                       └─────────┘
```

FIG. 8

EP 4 340 493 A1

| $rv_{id}$ indicated by the DCI scheduling the PUSCH | $rv_{id}$ to be applied to n-th slot in TOT | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

FIG. 9

| rv$_{id}$ indicated by the DCI scheduling the PUSCH | rv$_{id}$ to be applied to n-th slot in TOT | | | | | | | |
|---|---|---|---|---|---|---|---|---|
| | First slot (n=0) is normal slot | | | | First slot (n=0) is collided slot | | | |
| | n mod 4 = 0 | n mod 4 = 1 | n mod 4 = 2 | n mod 4 = 3 | n mod 4 = 0 | n mod 4 = 1 | n mod 4 = 2 | n mod 4 = 3 |
| 0 | 0 | 2 | 3 | 1 | 1 | 0 | 2 | 3 |
| 3 | 3 | 1 | 0 | 2 | 2 | 3 | 1 | 0 |

FIG. 10

TOT (Transmission occasion for TBoMS)

(a)

UL slot | Collided slot

U U U U U U U U U U U U U U U U D D D D D D F F U U U U U U U U

RV0 is applied. | RV2 is applied.

TOT (Transmission occasion for TBoMS)

(b)

Collided slot | UL slot

D D D D D D F F U U U U U U U U U U U U U U U U U U U U U U U U

RV1 is applied. | RV0 is applied.

FIG. 11

| $rv_{id}$ indicated by the DCI scheduling the PUSCH | $rv_{id}$ to be applied to n-th slot in TOT | | | | | | | |
|---|---|---|---|---|---|---|---|---|
| | First slot (n=0) is normal slot | | | | First slot (n=0) is collided slot | | | |
| | n mod 4 = 0 | n mod 4 = 1 | n mod 4 = 2 | n mod 4 = 3 | n mod 4 = 0 | n mod 4 = 1 | n mod 4 = 2 | n mod 4 = 3 |
| 0 | 0 | 2 | 3 | 1 | 1 | 0 | 2 | 3 |

FIG. 12

| $rv_{id}$ indicated by the DCI scheduling the PUSCH | $rv_{id}$ to be applied to n-th slot in TOT | | | |
| --- | --- | --- | --- | --- |
| | n mod 4 = 0 | n mod 4 = 1 | n mod 4 = 2 | n mod 4 = 3 |
| 0 | 0 | 2 | 3 | 1 |
| 1 | 1 | 0 | 2 | 3 |

FIG. 13

| RV sequence | $rv_{id}$ to be applied to n-th slot in TOT | | | | | | | |
|---|---|---|---|---|---|---|---|---|
| configured by RRC (TBoMS-RV) | First slot (n=0) is normal slot | | | | First slot (n=0) is collided slot | | | |
| | n mod 4 = 0 | n mod 4 = 1 | n mod 4 = 2 | n mod 4 = 3 | n mod 4 = 0 | n mod 4 = 1 | n mod 4 = 2 | n mod 4 = 3 |
| {0, 0, 0, 0} | 0 | 0 | 0 | 0 | 0 | 0 | 0 | 0 |
| {0, 3, 0, 3} | 0 | 3 | 0 | 3 | 3 | 0 | 3 | 0 |
| {0, 2, 3, 1} | 0 | 2 | 3 | 1 | 1 | 0 | 2 | 3 |

FIG. 14

FIG. 15

FIG. 16

EP 4 340 493 A1

TOT (Transmission occasion for TBoMS)

Collided slot | UL slot

RV1 is applied. | RV0 is applied. | RV2 is applied. | RV3 is applied.

(a)

TOT (Transmission occasion for TBoMS)

Collided slot | UL slot

RV0 is applied. | RV2 is applied. | RV3 is applied. | RV1 is applied. | RV0 is applied. | RV2 is applied. | RV3 is applied. | RV1 is applied.

(b)

FIG. 17

FIG. 18

**gNB or ng - eNB**

| Inter Cell RRM |
| RB Control |
| Connection Mobility Cont. |
| Radio Admission Control |
| Measurement Configuration & Provision |
| Dynamic Resource Allocation (Scheduler) |

NG - RAN

**AMF**

| NAS Security |
| Idle State Mobility Handling |

**UPF**

| Mobility Anchoring |
| PDU Handling |

5 GC

**SMF**

| UE IP address allocation |
| PDU Session Control |

internet

FIG. 19

FIG. 20

**Enhanced Mobile Broadband**

Gigabytes in a second

3D video, UHD screens

Smart Home/Building

Augmented reality

Work and play in the cloud

Mission critical application e.g. e-health

Smart City

Industry automation

**Massive Machine Type Communication**

Self Driving Car

**Ultra-reliable and Low Latency Communication**

FIG. 21

EP 4 340 493 A1

FIG. 22

50

# EP 4 340 493 A1

| INTERNATIONAL SEARCH REPORT | International application No. |
|---|---|
| | **PCT/JP2021/046609** |

**A. CLASSIFICATION OF SUBJECT MATTER**

*H04W 72/04*(2009.01)i; *H04W 72/12*(2009.01)i; *H04W 28/06*(2009.01)i
FI: H04W72/12 150; H04W72/04 131; H04W28/06 130

According to International Patent Classification (IPC) or to both national classification and IPC

**B. FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Moderator (NOKIA, NOKIA SHANGHAI BELL). Final FL summary of TB processing over multi-slot PUSCH (AI 8.8.1.2) [online]. 3GPP TSG RAN WG1 #104b-e R1-2104102. 21 April 2021<br>entire text, all drawings | 1-14 |
| A | QUALCOMM INCORPORATED. TB Processing over multi-slot PUSCH [online]. 3GPP TSG RAN WG1 #104b-e R1-2103179. 07 April 2021<br>entire text, all drawings | 1-14 |
| A | ERICSSON. TB Processing over Multi-Slot PUSCH [online]. 3GPP TSG RAN WG1 #104b-e R1-2103445. 07 April 2021<br>entire text, all drawings | 1-14 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **02 March 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## EP 4 340 493 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021079832 A

**Non-patent literature cited in the description**

- NR; Base Station (BS) radio transmission and reception (Release 15). *3GPP TS38.104 V15.13.0,* March 2021
- **CHINA TELECOM.** New WID on NR coverage enhancements. *3GPP TSG RAN Meeting #90e, RP-202928,* December 2020
- NR; Physical channels and modulation (Release 16). *3GPP TS38.211 V16.5.0,* March 2021
- NR; Multiplexing and channel coding (Release 16). *3GPP TS38.212 V16.5.0,* March 2021
- NR; Physical layer procedures for control (Release 16). *3GPP TS38.213 V16.5.0,* March 2021
- NR; Physical layer procedures for data (Release 16). *3GPP TS38.214 V16.5.0,* March 2021
- **NOKIA ; NOKIA SHANGHAI BELL.** Final FL summary of TB processing over multi-slot PUSCH (AI 8.8.1.2). *3GPP TSG RAN WG1 #104-bis-e, R1-2104102,* April 2021
- **PANASONIC.** Discussion on TB processing over multi-slot PUSCH. *3GPP TSG RAN WG1 #104-bis-e, R1-2103208,* April 2021
- NR; Radio Resource Control (RRC) protocol specification (Release 16). *3GPP TS38.331 V16.4.1,* March 2021